(19) Europäisches Patentamt
European Patent Office
Office européen des brevets

(11) **EP 2 564 262 B1**

(12) **EUROPÄISCHE PATENTSCHRIFT**

(45) Veröffentlichungstag und Bekanntmachung des Hinweises auf die Patenterteilung:
**06.01.2016 Patentblatt 2016/01**

(21) Anmeldenummer: **11719179.1**

(22) Anmeldetag: **21.04.2011**

(51) Int Cl.:
*G02C 7/02* *(2006.01)*    *G02C 7/06* *(2006.01)*

(86) Internationale Anmeldenummer:
**PCT/EP2011/002055**

(87) Internationale Veröffentlichungsnummer:
**WO 2011/134632 (03.11.2011 Gazette 2011/44)**

(54) **VERFAHREN ZUR BERECHNUNG EINES BRILLENGLASES MIT BLICKWINKELABHÄNGIGEN VERORDNUNGSDATEN**

METHOD FOR CALCULATING A SPECTACLE LENS USING VIEWING ANGLE-DEPENDENT PRESCRIPTION DATA

PROCÉDÉ POUR CALCULER DES VALEURS RELATIVES À UN VERRE DE LUNETTES AVEC DES DONNÉES DE PRESCRIPTION DÉPENDANT DE L'ANGLE DE VISION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2011 DE 102011009473**
**28.04.2010 DE 102010018503**

(43) Veröffentlichungstag der Anmeldung:
**06.03.2013 Patentblatt 2013/10**

(73) Patentinhaber: **Rodenstock GmbH**
**80687 München (DE)**

(72) Erfinder:
• **ESSER, Gregor**
**81735 München (DE)**
• **ALTHEIMER, Helmut**
**87650 Baisweil-Lauchdorf (DE)**
• **BECKEN, Wolfgang**
**81541 München (DE)**
• **WELK, Andrea**
**81547 München (DE)**

• **UTTENWEILER, Dietmar**
**82057 Icking (DE)**

(74) Vertreter: **Müller-Boré & Partner**
**Patentanwälte PartG mbB**
**Friedenheimer Brücke 21**
**80639 München (DE)**

(56) Entgegenhaltungen:
**WO-A1-2008/089999    US-A1- 2006 209 255**

• **HARRIS W F: "Power vectors versus power matrices, and the mathematical nature of dioptric power", OPTOMETRY AND VISION SCIENCE LIPPINCOTT WILLIAMS & WILKINS USA, Bd. 84, Nr. 11, November 2007 (2007-11), Seiten 1060-1063, XP000002656509, ISSN: 1040-5488**
• **HARRIS W F: "Dioptric power: its nature and its representation in three- and four-dimensional space", OPTOMETRY AND VISION SCIENCE WILLIAMS & WILKINS FOR AMERICAN ACAD. OPTOMETRY USA, Bd. 74, Nr. 6, Juni 1997 (1997-06), Seiten 349-366, XP000002656510, ISSN: 1040-5488**

**Beschreibung**

Die Erfindung bezieht sich auf ein Verfahren zum Berechnen oder Optimieren eines Brillenglases, ein entsprechendes Herstellungsverfahrens, sowie entsprechende Vorrichtungen, Speichermedien und Computerprogrammerzeugnisse.

In der DE 103 13 275 A1 wird ein Verfahren zur Berechnung eines individuellen Brillenglases beschrieben. Die Optimierung oder Berechnung des individuellen Brillenglases erfolgt durch die Minimierung einer Zielfunktion der Form:

$$\min \sum_i ga_i (A_{ist} - A_{soll})_i^2 + gb_i (B_{ist} - B_{soll})_i^2 ...,$$

wobei $A$ und $B$ die zu optimierenden Eigenschaften des Brillenglases, wie zum Beispiel Astigmatismus, Brechwert, Verzeichnung, binokulare Imbalanzen, Gradienten von Astigmatismus und Brechwert, Verzerrungen usw., und $ga_i$ und $gb_i$ Gewichtungen der jeweiligen Eigenschaft darstellen. In DE 103 13 275 ist erkannt worden, dass es vorteilhaft ist, die Sollvorgaben nicht als absolute Werte sondern als Abweichung von der Verordnung oder als zulässige Fehler vorzugeben. Dies hat den Vorteil, dass die Sollvorgaben unabhängig von der Verordnung $(Sph_V, Zyl_V, Achse_V, Pr_V, B_V)$ sind und die Sollvorgaben nicht für jede individuelle Verordnung geändert werden müssen.

In der EP 0 677 177 wird ein Brillenglas sowie ein entsprechendes Optimierungsverfahren beschrieben, wobei der unter Berücksichtigung des Astigmatismus schiefer Bündel resultierende Gesamtastigmatismus des Brillenglases längs der Hauptlinie nahezu konstant oder nach physiologischen Anforderungen variabel sowohl bezüglich Betrag als auch Achslage ist. Insbesondere kann eine Änderung der Achslage eines astigmatischen Auges bei Blicksenkung nach der Listingschen Regel berücksichtigt werden.

Ferner ist bekannt (vgl. z.B. das Lehrbuch K. Krause, "Methoden der Refraktionsbestimmung", 1985, Seiten 158 bis 161), dass aus unterschiedlichen physiologischen Gründen sich der beim Blicken in die Nähe gemessene, individuelle Augenastigmatismus von dem beim Blicken in die Ferne gemessenen, individuellen Augenastigmatismus unterscheiden kann. Ebenfalls ist bekannt, diesem Unterschied durch eine geeignete Gestaltung des Brillenglases Rechnung zu tragen. Die europäische Patentanmeldung EP 1 660 928 und das parallele US Patent 7,249,850 beschreiben jeweils ein Verfahren zum Optimieren eines Brillenglases bei dem unterschiedliche astigmatische Wirkungen in der Ferne und in der Nähe berücksichtigt werden.

Es ist eine Aufgabe der Erfindung, ein verbessertes Verfahren zum Berechnen oder Optimieren eines Brillenglases, vorzugsweise eines progressiven Brillenglases, anzugeben, wobei das Brillenglas besser an die individuellen Anforderungen des Brillenträgers angepasst ist. Insbesondere ist eine Aufgabe der Erfindung, ein verbessertes Verfahren zum Berechnen und Optimieren eines progressiven Brillenglases beim Vorliegen von Refraktionsdaten (Verordnungsdaten) für die Ferne und Refraktionsdaten (Verordnungsdaten) für die Nähe anzugeben.

Gemäß einem ersten Aspekt der Erfindung wird diese Aufgabe durch ein computerimplementiertes Verfahren zum Berechnen oder Optimieren eines Brillenglases mit den im Anspruch 1 angegebenen Merkmalen; eine Vorrichtung zum Berechnen oder Optimieren eines Brillenglases mit den im Anspruch 10 angegebenen Merkmalen; ein Computerprogrammerzeugnis mit den im Anspruch 11 angegeben Merkmalen; ein Speichermedium mit den im Anspruch 12 angegeben Merkmalen; ein Verfahren zum Herstellen eines Brillenglases mit den im Anspruch 13 angegeben Merkmalen; sowie eine Vorrichtung zum Herstellen eines Brillenglases mit den im Anspruch 14 angegebenen Merkmalen gelöst. Bevorzugte Ausführungsformen sind Gegenstand der abhängigen Ansprüche.

Gemäß einem ersten Aspekt der Erfindung wird ein computerimplementiertes Verfahren zum Berechnen oder Optimieren eines Brillenglases bereitgestellt, wobei das Verfahren die folgenden Schritte umfasst:

Erfassen von Verordnungs- bzw. Refraktionsdaten $V_{A1_1}$ und $V_{A1_2}$ eines Brillenträgers für zumindest zwei unterschiedliche Objektentfernungen $A1_1$ und $A1_2$ ($A1_1 \neq A1_2$);
Vorgabe eines Objektabstandsmodells $A1(x, y)$, wobei $A1$ die Objektentfernung und $(x, y)$ eine Durchblickstelle bzw. einen Durchblickpunkt des Brillenglases in einer vorgegeben oder vorgebbaren Blickrichtung bezeichnen;
Vorgabe eines Modells, welches die Abhängigkeit der Verordnung von der Objektentfernung $A1$ vorgibt,
Ermitteln der Verordnung in den Durchblickstellen $(x, y)$ anhand des Objektabstandsmodells $A1(x, y)$ und der erfassten Verordnungs- oder Refraktionsdaten $V_{A1_1}$ und $V_{A1_2}$;
Berechnen oder Optimieren zumindest einer Fläche des Brillenglases unter Berücksichtigung der ermittelten Verordnung in den Durchblickstellen $(x, y)$.

Dabei bezeichnet $V_{A1_1} = V_1$ die Verordnungs- oder Refraktionsdaten für die erste Objektentfernung $A1_1$ und $V_{A1_2} = V_2$ die Verordnungs- bzw. Refraktionsdaten für die zweite Objektentfernung $A1_2$.

Die zweite Fläche des Brillenglases kann eine vorgegebene oder vorgebare Fläche sein, zum Beispiel eine einfache sphärische oder rotationssymmetrische asphärische Fläche. Es ist selbstverständlich möglich, beide Flächen des Brillenglases unter Berücksichtigung der ermittelten blickwinkel- bzw. blickrichtungsabhängigen Verordnung zu optimieren.

Bei der Refraktionsbestimmung bestimmt der ECP ("Eye Care Practitioner", d.h. Augenoptiker, Optometrist oder Augenarzt) dioptrische Werte (Sphäre bzw. sphärische Wirkung (*Sph*), Zylinder bzw. Betrag des Astigmatismus/des Zylinders (*Zyl*), Zylinderachse bzw. Astigmatismusachse *(Achse* oder A)) für eine weite, in der Regel unendliche, Entfernung. Bei progressiven Brillengläsern wird zusätzlich eine Addition (*Add*) für eine zweite, nahe Entfernung (z.B. nach DIN 58208) bestimmt. Damit sind die Verordnungsdaten *V (Sph, Zyl , A, Add)* = $(Sph_V, Zyl_V, Achse_V, Add_V)$, die an den Brillenglashersteller übermittelt werden, bestimmt. Gegebenenfalls kann zusätzlich eine prismatische Verordnung $(Pr_V, B_V)$ vom ECP bestimmt und an den Brillenhersteller übermittelt werden.

Bei modernen individuellen Brillengläsern (zum Beispiel Rodenstock "Impression FreeSign") kann der ECP zusätzlich zu den Verordnungswerten auch von der Norm abweichende Objektentfernungen, die bei der Refraktionsbestimmung verwendet wurden, angeben und an den Brillenhersteller übermitteln.

Der Brillenglashersteller berechnet oder optimiert das Brillenglas unter Berücksichtigung der erfassten Verordnungsdaten. In der Regel wird das Brillenglas so berechnet oder optimiert, dass in den Bezugspunkten (Fern- und/oder Nahbezugspunkt) des Brillenglases die erfassten Verordnungswerte $Sph_V, Zyl_V, Achse_V, Add_V$ erreicht werden. Dabei wird die Verordnung bzw. werden die Verordnungswerte bei dem Optimierungsprozess als fester Wert (bzw. als feste Werte) vorgegeben.

Zusätzlich zu der Verordnung in der Ferne und gegebenenfalls der Addition bei progressiven Brillengläsern kann es vorteilhaft sein, die Verordnung bzw. die zur Korrektur einer Fehlsichtigkeit des Brillenträgers erforderliche dioptrische Wirkung für mehr als eine Objektentfernung, vorzugsweise für eine Entfernung in der Ferne (z.B. Unendlich) und eine Entfernung in der Nähe) zu berücksichtigen. So kann zum Beispiel die zur Korrekturzwecken erforderliche astigmatische Wirkung (Zylinder, Achse) in Abhängigkeit vom Blickwinkel variieren. Ursache hierfür kann beispielsweise eine Deformation der Augenlinse, des ganzen Auges oder eine Änderung des Pupillendurchmessers bei der Akkommodation sein.

Gemäß einem Aspekt der Erfindung wird vorgeschlagen, im Optimierungsprozess die Verordnung nicht als festen Wert vorzugeben, sondern als ein Modell der Objektentfernung *A*1. Das Modell kann ein mathematisches Modell sein, z.B. in Form einer Funktion, welche die Abhängigkeit der Verordnung von der Objektentfernung beschreibt. Dies ermöglicht ein Integrieren von blickwinkel- bzw. blickrichtungsabhängigen Verordnungsdaten im Optimierungsprozess in einer einfachen und effizienten Art und Weise und führt zu erheblich verbesserten Abbildungseigenschaften eines so berechneten Brillenglases, insbesondere eines individuellen progressiven Brillenglases.

Vorzugsweise wird die Objektentfernung als Kehrwert des Objektabstands bzw. des Abstands vom Objekt zur Vorderfläche des Brillenglases in einer vorgegebenen Blickrichtung (gemessen in dpt) angegeben. Das Koordinatensystem, in welchem die Modelle vorgegeben und die Berechnung durchgeführt werden, kann ein Koordinatensystem der Vorderfläche, der Rückfläche oder ein beliebiges geeignetes Koordinatensystem sein. Das Koordinatensystem kann beispielsweise ein Koordinatensystem in der zu optimierenden objektseitigen oder augenseitigen Fläche des Brillenglases sein, wobei der Ursprung des Koordinatensystems beispielsweise mit dem geometrischen Mittelpunkt des (rohrunden) Brillenglases oder mit dem Zentrier- oder dem Anpasspunkt des Brillenglases zusammenfällt. Die vertikale ("*y*") und horizontale ("*x*") Achse liegen in der tangentialen Ebene zu der jeweiligen augenseitigen oder objektseitigen Fläche des Brillenglases in dem geometrischen Mittelpunkt bzw. dem Zentrier- bzw. Anpasspunkt. Die vertikale Richtung bezieht sich vorzugsweise auf die vertikale Richtung in Gebrauchsstellung des Brillenglases, wobei das Brillenglas beispielsweise in einer durchschnittlichen Gebrauchsstellung (wie z.B. in DIN 58 208 Teil 2 definiert) oder in einer individuellen Gebrauchsstellung angeordnet ist. Vorzugsweise ist das Brillenglas in einer individuellen Gebrauchsstellung angeordnet. Es ist selbstverständlich möglich, alle Modelle in anderen geeigneten Koordinatensystemen anzugeben und anschließend alle Berechnungen in dem gewählten Koordinatensystem durchzuführen.

Das Objektabstandsmodell kann durch eine geeignete Funktion *A*1(*x, y*), welche die einem Durchblickpunkt (*x, y*) zugeordnete Objektentfernung beschreibt, vorgegeben werden. Ein standardisiertes Objektabstandsmodel ist z.B. in DIN 58 208 Teil 2 (vgl. Bild 6) angegeben. Das Objektabstandsmodel kann jedoch von diesem standardisierten Objektabstandsmodel abweichen. Geeignete Objektabstandsmodelle werden nachfolgend im Detail beschrieben.

Die Verordnung kann durch einen Tupel mit den zu Korrekturzwecken erforderlichen dioptrischen Wirkungen (sphärische, astigmatische und/oder prismatische Wirkung) beschrieben werden. Ebenfalls ist es möglich, die Verordnung durch einen Vektor, dessen Komponenten entweder den einzelnen Verordnungsbestandteilen (Sphäre, Zylinder, Achse, etc.) entsprechen oder vorgegebene Funktionen der einzelnen Verordnungsbestandteile sind, mathematisch zu beschreiben. Die Verordnungswerte oder anders ausgedrückt die Größe der erforderlichen sphärischen, astigmatischen und/oder prismatischen Wirkung können mittels subjektiver Methoden (z.B. durch einen ECP) oder objektiver Methoden (z.B. durch einen Abberometer) der Refraktionsbestimmung ermittelt werden.

Die Verordnungsdaten können Daten bezüglich der erforderlichen sphärischen Wirkung $Sph_V$, Zylinder $Zyl_V$, Achse $Achse_V$, Prisma $Pr_V$ und/oder Prismenbasis $B_V$ für zumindest zwei unterschiedliche Objektentfernungen $A1_1$ und

$A1_2$ ($A1_1 \neq A1_2$) umfassen. Insbesondere umfassen die Verordnungsdaten Daten bezüglich der erforderlichen sphärischen Wirkung $Sph_V$, des erforderlichen Betrag des Astigmatismus oder des Zylinders $Zyl_V$ und der erforderlichen Zylinder- bzw. Astigmatismusachse oder Achse $Achse_V$ für zumindest zwei unterschiedliche Objektentfernungen $A1_1$ und $A1_2$ ($A1_1 \neq A1_2$). Somit ist es möglich, einer Deformation der Augenlinse oder des ganzen Auges und/oder einer Änderung des Pupillendurchmessers bei der Akkommodation bei der Berechnung oder Optimierung des Brillenglases Rechnung zu tragen.

Es ist ebenfalls möglich, zusätzlich oder alternativ eine prismatische Wirkung (Prisma, Basis) für zumindest zwei unterschiedliche Objektentfernungen $A1_1$ und $A1_2$ zu berücksichtigen.

Gemäß einem bevorzugten Ausführungsbeispiel wird die Verordnung mittels eines Vektors

$$\mathbf{P}_{Ref} = \begin{pmatrix} M^{Ref} \\ J^{Ref}_{\phantom{Ref}0} \\ J^{Ref}_{\phantom{Ref}45} \end{pmatrix}$$

(nachfolgend Powervektor der Verordnung) beschrieben, wobei:

$$M^{Ref} = Sph_V + \frac{Zyl_V}{2}$$

$$J^{Ref}_{\phantom{Ref}0} = -\frac{Zyl_V}{2}\cos 2 Achse_V \ .$$

$$J^{Ref}_{\phantom{Ref}45} = -\frac{Zyl_V}{2}\sin 2 Achse_V$$

Dabei gilt für die jeweilige Objektentfernung $A1_1$ oder $A1_2$ für die Komponenten des Powervektors der Verordnung:

$$\mathbf{P}_{Ref}(A1_1) = \begin{pmatrix} M^{Ref}(A1_1) \\ J^{Ref}_{\phantom{Ref}0}(A1_1) \\ J^{Ref}_{\phantom{Ref}45}(A1_1) \end{pmatrix} , \quad \begin{aligned} M^{Ref}(A1_1) &= Sph_V(A1_1) + \frac{Zyl_V(A1_1)}{2} \\ J^{Ref}_{\phantom{Ref}0}(A1_1) &= -\frac{Zyl_V(A1_1)}{2}\cos 2 Achse_V(A1_1) \ , \\ J^{Ref}_{\phantom{Ref}45}(A1_1) &= -\frac{Zyl_V(A1_1)}{2}\sin 2 Achse_V(A1_1) \end{aligned}$$

und

$$\mathbf{P}_{Ref}(A1_2) = \begin{pmatrix} M^{Ref}(A1_2) \\ J^{Ref}_{\phantom{Ref}0}(A1_2) \\ J^{Ref}_{\phantom{Ref}45}(A1_2) \end{pmatrix} , \quad \begin{aligned} M^{Ref}(A1_2) &= Sph_V(A1_2) + \frac{Zyl_V(A1_2)}{2} \\ J^{Ref}_{\phantom{Ref}0}(A1_2) &= -\frac{Zyl_V(A1_2)}{2}\cos 2 Achse_V(A1_2) \ . \\ J^{Ref}_{\phantom{Ref}45}(A1_2) &= -\frac{Zyl_V(A1_2)}{2}\sin 2 Achse_V(A1_2) \end{aligned}$$

In den obigen Formeln bezeichnet $V_{A1_1} = (Sph_V(A1_1), Zyl_V(A1_1), Achse_V(A1_1))$ die erfassten Verordnungsdaten/Refraktionsdaten für die erste Objektentfernung $A1_1$; und $V_{A1_2} = (Sph_V(A1_2), Zyl_V(A1_2), Achse_V(A1_2))$ die erfassten Verordnungsdaten/Refraktionsdaten für die zweite Objektentfernung $A1_2$.

Die Vorgabe eines Modells, welches die Abhängigkeit der Verordnung von der Objektentfernung $A1$ vorgibt,

umfasst dann die Vorgabe einer Funktion $\mathbf{P}_{Ref} = f(A1)$, welche die Abhängigkeit des Powervektors $\mathbf{P}_{Ref}$ bzw. der Komponenten des Powervektors von der Objektentfernung $A1$ beschreibt. Das Ermitteln der Verordnung in den Durchblickstellen (x, y) umfasst ein Ermitteln des Vektors $\mathbf{P}_{Ref}(x,y)$ bzw. der Komponenten des Powervektors $\mathbf{P}_{Ref}$ der Verordnung anhand des Objektabstandsmodells $A1(x,y)$ und der erfassten Verordnungsdaten $V_{A1_1}$ und $V_{A1_2}$.

Mit Hilfe des Vektors $\mathbf{P}_{Ref}$ ist es möglich, die Verordnungswerte und die Werte des Brillenglases in einer einfachen Weise vektoriell (z.B. nach der Kreuz-Zylinder Methode) zu addieren. Es ist ebenfalls möglich, den Vektor $\mathbf{P}_{Ref}$ auf das Prisma $Pr_V$ und Prismenbasis $B_V$ zu erweitern:

$$\mathbf{P}_{Ref} = \begin{pmatrix} M^{Ref} \\ J^{Ref}_0 \\ J^{Ref}_{45} \\ P^{Ref}_0 \\ P^{Ref}_{90} \end{pmatrix} \quad \text{mit} \quad \begin{aligned} M^{Ref} &= Sph_V + \frac{Zyl_V}{2} \\ J^{Ref}_0 &= -\frac{Zyl_V}{2}\cos 2Achse_V \\ J^{Ref}_{45} &= -\frac{Zyl_V}{2}\sin 2Achse_V \\ P^{Ref}_0 &= Pr_V \cos B_V \\ P^{Ref}_{90} &= Pr_V \sin B_V \end{aligned} \quad .$$

Ein weiterer Vorteil ist eine verbesserte Berücksichtigung der physiologischen Eigenschaften des Auges und insbesondere des astigmatischen Auges beim Blicken in unterschiedlichen Objektentfernungen. Dies gilt insbesondere für den Fall, dass sich die Achslage des Verordnungsastigmatismus mit der Objektentfernung oder der Blickrichtung ändert.

Das Modell für die Abhängigkeit der Verordnung von der Objektentfernung bzw. für die Abhängigkeit des Powervektors der Verordnung von der Objektentfernung kann ein lineares Modell oder ein nicht-lineares Modell sein. Beispielsweise kann/können der Powervektor $\mathbf{P}_{Ref}$ der Verordnung oder dessen Komponenten eine quadratische Funktion der Objektentfernung $A1$

$$\mathbf{P}_{Ref}(x,y) = f(Al(x,y)) = a + b * Al(x,y)^2 \, ,$$

oder eine lineare Funktion der Objektentfernung $A1$

$$\mathbf{P}_{Ref}(x,y) = f(Al(x,y)) = a + b * Al(x,y) \, ,$$

sein, wobei $a$ und $b$ Konstanten sind, welche in Abhängigkeit von den erfassten Verordnungsdaten $Sph_V, Zyl_V, Achse_V$ für zumindest zwei unterschiedliche Objektentfernungen $Al_1$ und $Al_2$ berechnet werden.

Dabei gilt:

$$\mathbf{P}_{Ref}(V_{Al_1}) = \mathbf{P}_{Ref}(V_1, Al = Al_1) = f(Al_1)$$

und

$$\mathbf{P}_{Ref}(V_{Al_2}) = \mathbf{P}_{Ref}(V_2, Al = Al_2) = f(Al_2) \, .$$

Anhand der obigen Bedingungen ist es möglich, die Konstanten $a$ und $b$ in der obigen Funktion und somit $\mathbf{P}_{Ref}(x,y)$ eindeutig zu bestimmen/ermittetn.

Die Abhängigkeit des Vektors $\mathbf{P}_{Ref}$ kann auch mit folgendem nicht-linearem Modell beschrieben werden:

$$P_{Ref}(x,y) = f(Al(x,y)) = a + b * Al(x,y) + c * Al(x,y)^2$$

und wobei $a,b$ und c Konstanten sind, welche in Abhängigkeit von den erfassten Verordnungsdaten $Sph_V, Zyl_V, Achse_V$ für zumindest drei unterschiedliche Objektentfernungen $Al_1$, $Al_2$ und $Al_3$ berechnet werden.

Dabei gilt:

$$P_{Ref}(V_{Al_1}) = P_{Ref}(V_1, Al = Al_1) = f(Al_1),$$

$$P_{Ref}(V_{Al_2}) = P_{Ref}(V_2, Al = Al_2) = f(Al_2)$$

und

$$P_{Ref}(V_{Al_3}) = P_{Ref}(V_3, Al = Al_3) = f(Al_3).$$

Anhand der obigen Bedingungen ist es möglich, die Konstanten $a$ und $b$ und $c$ in der obigen Funktion und somit $P_{Ref}(x,y)$ eindeutig zu bestimmen/ermitteln.

Erfindungsgemäß erfolgt in einem zwei-dimensionalen Vektorraum, welcher durch die zwei Komponenten $J^{Ref}0$ und $J^{Ref}_{45}$ des Powervektors $P_{Ref}$ aufgespannt wird, der Übergang von einem ersten Punkt mit Koordinaten $(J^{Ref}0(A1_1), J^{Ref}45(A1_1))$ zu einem zweiten Punkt mit Koordinaten $(J^{Ref}_0(Al_2), J^{Ref}_{45}(Al_2))$ entlang der kürzesten Verbindung zwischen dem ersten und dem zweiten Punkt.

Ferner erfolgt in einem drei-dimensionalen Vektorraum, welcher durch die drei Komponenten $M^{Ref}$, $J^{Ref}_0$ und $J^{Ref}_{45}$ des Powervektors $P_{Ref}$ aufgespannt wird, der Übergang von einem ersten Punkt mit Koordinaten $(M^{Ref}(A1_1), J^{Ref}_0(A1_1), J^{Ref}_{45}(A1_1))$ zu einem zweiten Punkt mit Koordinaten $(M^{Ref}(Al_2), J^{Ref}_0(Al_2), J^{Ref}45(Al_2))$ entlang der kürzesten Verbindung zwischen dem ersten und dem zweiten Punkt.

In den obigen Beispielen erfolgt der Übergang von der Ferne zur Nähe oder allgemein von der ersten Objektentfernung zur zweiten Objektentfernung entlang der kürzesten Verbindung im zwei-dimensionalen Vektorraum, welcher durch die zwei Komponenten ($J^{Ref}_0$, $J^{Ref}45$) des Powervektors aufgespannt wird, oder besonders bevorzugt im drei-dimensionalen Vektorraum, welcher durch die drei Komponenten $M^{Ref}$, $J^{Ref}_0$ und $J^{Ref}_{45}$ des Powervektors $P_{Ref}$ aufgespannt wird. So zeigt sich in einem kartesischen Koordinatensystem mit Achsen $J^{Ref}_0$ und $J^{Ref}45$ nach einem bevorzugten Beispiel der Erfindung ein geradliniger Übergang von einem ersten Punkt mit Koordinaten $(J^{Ref}(A1_1)$, $J^{Ref}_{45}(A1_1))$, welche der ersten Objektentfernung $A1_1$ entsprechen, zu einem zweiten Punkt mit Koordinaten $(J^{Ref}0(A1_2)$, $J^{Ref}45(A1_2))$, welche der zweiten Objektentfernung $Al_2$ entsprechen. Die erste Objektentfernung kann die Objektentfernung für die Ferne (z.B. Unendlichkeit) und die zweite Objektentfernung die Objektentfernung für die Nähe sein (z.B. Leseentfernung).

Dies ermöglicht insbesondere eine verbesserte Berücksichtigung der physiologischen Eigenschaften des Auges und insbesondere des astigmatischen Auges beim Blicken in unterschiedlichen Objektentfernungen. Durch die Verwendung von Powenrektoren und insbesondere durch den oben beschriebenen Übergang entlang der kürzesten Verbindung kann ferner sichergestellt werden, dass für jeden beliebigen Zwischenwert der berechneten Verordnung (als Funktion der Objektentfernung) die Summe des Abstandes (vom berechneten Wert) zu den beiden Ausgangsverordnungen (z.B. gemessene Refraktionen für Ferne und Nähe) minimal und konstant ist.

Die Berechnung oder Optimierung des Brillenglases erfolgt in der Regel anhand der Minimierung einer Zielfunktion $Z$ der Form $Z(Istwerte - Sollwerte)$. Vorzugsweise umfasst das Berechnen oder Optimieren zumindest einer Fläche des Brillenglases eine Minimierung einer Zielfunktion

$$Z = \sum_{i=1}^{N} (K(Ref, Ast) - S(Ref, Ast))_i^2,$$

wobei:

$i, i = 1...N$ die $i$-te Durchblickstelle $(x, y)_i$ bezeichnet;

$K(Ref,Ast)$ den Refraktionsfehler *Ref* und den astigmatischen Fehler *Ast* an der *i*-ten Durchblickstelle des Brillenglases bezeichnet; und

$S(Ref,Ast)$ Sollwerte für den Refraktionsfehler *Ref* und den astigmatischen Fehler *Ast* an der *i*-ten Durchblickstelle des Brillenglases bezeichnet.

Der Refraktionsfehler stellt die Differenz des Brechwerts des Brillenglases und des Brechwerts gemäß der Verordnung dar. Die astigmatische Abweichung bzw. der astigmatische Fehler stellt die Differenz des Astigmatismus des Brillenglases und des Astigmatismus gemäß der Verordnung dar. Vorzugsweise handelt es sich dabei um Werte in Gebrauchsstellung des Brillenglases, d.h. unter Berücksichtigung des Systems Brillenglas-Auge.

In die Zielfunktion kann ferner eine Gewichtung der einzelnen Fehler (d.h. des Refraktionsfehlers und des astigmatischen Fehlers) eingehen. Insbesondere kann jeder der Fehler ortsabhängig über die Durchblickstelle *i* gewichtet werden.

Vorzugsweise umfasst das Verfahren zum Berechnen oder Optimieren eines Brillenglases ferner einen Schritt der Vorgabe eines Akkomodationsmodells für den Akkommodationserfolg *Akk* als Funktion der Objektentfemung $A1$. Der Refraktionsfehler und der astigmatische Fehler können dann wie folgt berechnet werden:

$$Ast = -2\sqrt{J^{Dif}{}_0^2 + J^{Dif}{}_{45}^2} \, ,$$

$$Ref = M^{Dif}$$

wobei:

$$\mathbf{P}_{Dif} = \begin{pmatrix} M^{Dif} \\ J^{Dif}{}_0 \\ J^{Dif}{}_{45} \end{pmatrix} = \mathbf{P}_{BG+Akk} - \mathbf{P}_{Ref} \, ,$$

$$\mathbf{P}_{BG+Akk} = \begin{pmatrix} M^{BG+Akk} \\ J_0^{BG+Akk} \\ J_{45}^{BG+Akk} \end{pmatrix} \, ,$$

$$M^{BG+Akk} = (Sph_{BG} + Akk) + \frac{Zyl_{BG}}{2}$$

$$J^{BG+Akk}{}_0 = -\frac{Zyl_{BG}}{2}\cos 2 Achse_{BG}$$

$$J^{BG+Akk}{}_{45} = -\frac{Zyl_{BG}}{2}\sin 2 Achse_{BG}$$

und

$Sph_{BG}, Zyl_{BG}, Achse_{BG}$ jeweils die Sphäre $Sph_{BG}$, Astigmatismus $Ast_{BG}$ und Astigmatismusachse $Achse_{BG}$ eines Brillenglases in Gebrauchsstellung bezeichnen. Sind auch die prismatischen Komponenten gegeben, so sind diese vorzugsweise wie die astigmatischen unabhängig von der Akkommodation.

Dabei bezeichnet *Akk* den Akkommodationserfolg des Auges an der Scheitelpunktkugel bzw. die notwendige Akkommodation des Auges um die gewünschte Korrektur zu erhalten. Die Scheitelpunktkugel ist als die Kugel durch den Scheitelpunkt der Rückfläche des Brillenglases mit dem Augendrehpunkt als Mittelpunkt definiert.

Der Akkommodationserfolg *Akk* kann zum Beispiel eine lineare Funktion der Objektentfernung sein.

Wie bereits oben ausgeführt kann das Objektabstandsmodell durch eine geeignete Funktion *Al(x, y)*, welche die einem Durchblickpunkt *(x,* y) zugeordnete Objektentfernung beschreibt, vorgegeben werden. Ein standardisiertes Objektabstandsmodel ist z.B. in DIN 58 208 Teil 2 (vgl. Bild 6) angegeben. Das Objektabstandsmodel kann jedoch von diesem standardisierten Objektabstandsmodel abweichen.

Die Objektentfernung hängt in der Regel sehr stark von der vertikalen y-Koordinate und weniger stark von der horizontalen x -Koordinate ab.

Vorzugsweise wird die Abhängigkeit der Objektentfernung $A1(y)$ von der vertikalen Koordinate *y* durch eine lineare Funktion oder durch eine Doppelasymptotenfunktion beschrieben.

In einem linearen Modell können die Koeffizienten der linearen Funktion durch vorgegebene Bedingungen für die Objektentfernungen in den Bezugspunkten (z.B. Fernbezugspunkt und Nahbezugspunkt) eindeutig bestimmt werden. Es ist auch möglich, die Abhängigkeit der Objektentfernung von der *y* -Koordinate durch eine nicht-lineare Funktion zu beschreiben bzw. vorzugeben, wie z.B. eine Doppelasymptotenfunktion $A1(y) = b + a - \dfrac{a}{(1 + e^{c(y+d)})^m}$ .

Hierbei können zwei der Koeffizienten, in der Regel die Koeffizienten *b* und *a*, durch die vorgegebenen Bedingungen für die Objektentfernungen in den Bezugspunkten bestimmt werden. Die anderen Koeffizienten der Doppelasymptotenfunktion können frei vorgegeben werden. Diese Koeffizienten stellen zusätzliche Freiheitsgrade dar, mit welchem das Design des Brillenglases geändert werden kann.

Bezüglich der Abhängigkeit von der horizontalen *x*-Koordinate bieten sich auch Freiheitsgerade. Im einfachsten Fall wird ein Modell vorgegeben, wobei die Objektentfernung im Horizontalschnitt konstant (d.h. bei *y = const.*) ist.

Alternativ kann die Abhängigkeit der Objektentfernung $A1(x)$ von der horizontalen Koordinate *x* durch eine lineare Funktion oder durch eine quadratische Funktion (z.B. eine parabolische Funktion) des Abstands von der Glasmitte oder der Hauptlinie beschrieben werden. Vorzugsweise nimmt die Objektentfernung $A1(x)$ im Horizontalschnitt bei *y = const* mit Zunahme des Abstands von der Glassmitte oder von der Hauptlinie im Fernbereich ab und im Nahbereich zu.

Das oben beschriebene Verfahren zum Berechnen oder Optimieren eines Brillenglases kann sowohl für Einstärkenbrillengläser als auch für progressive Brillengläser angewendet werden. Vorzugsweise ist das zu optimierende Brillenglas ein progressives Brillenglas. Das Berechnen/Optimieren des Brillenglases erfolgt vorzugsweise in Gebrauchsstellung des Brillenglases unter Berücksichtigung von durchschnittlichen oder individuellen Parametern (Fassungsscheibenwinkel, Vorneigung, Pupillendistanz, Hornhautscheitelabstand, etc.) des Brillenträgers und/oder der Gebrauchsstellung des Brillenglases vor den Augen des Brillenträgers.

Gemäß einem zweiten Aspekt wird eine Vorrichtung zum Berechnen oder Optimieren eines Brillenglases vorgeschlagen, welche ausgelegt ist, das computerimplementierte Verfahren zum Berechnen oder Optimieren eines Brillenglases gemäß einem bevorzugten Beispiel der Erfindung, durchzuführen.

Die Vorrichtung zum Berechnen oder Optimieren eines Brillenglases umfasst
Verordnungsdatenerfassungsmittel, welche ausgelegt sind, Verordnungs- bzw. Refraktionsdaten $V_{A1_1}$ und $V_{A1_2}$ eines Brillenträgers für zumindest zwei unterschiedliche Objektentfernungen $A1_1$ und $A1_2$ $(A1_1 \neq A1_2)$ zu erfassen;
Objektabstandsmodellvorgabemittel, welche ausgelegt sind, ein Objektabstandsmodell $A1(x,y)$ vorzugeben, wobei $A1$ die Objektentfernung und *(x, y)* eine Durchblickstelle bzw. einen Durchblickpunkt des Brillenglases in einer vorgegeben oder vorgebbaren Blickrichtung bezeichnen;
Verordnungsmodellvorgabemittel, welche ausgelegt sind, ein Modell, welches die Abhängigkeit der Verordnung von der Objektentfernung $A1$ beschreibt, vorzugeben
Verordnungsermittlungsmittel, welche ausgelegt sind, die Verordnung in den Durchblickstellen *(x, y)* anhand des Objektabstandsmodells $A1(x,y)$ und der erfassten Verordnungsdaten $V_{A1_1}$ und $V_{A1_2}$ zu ermitteln,
Berechnungs- oder Optimierungsmittel, welche ausgelegt sind, zumindest eine Fläche des Brillenglases unter Berücksichtigung der ermittelten Verordnung in den Durchblickstellen *(x, y)* zu berechnen oder zu optimieren.

Gemäß einem bevorzugten Ausführungsbeispiel der Erfindung umfasst die Vorrichtung zum Berechnen oder Optimieren eines Brillenglases
Verordnungsdatenerfassungsmittel, welche ausgelegt sind, Verordnungs- bzw. Refraktionsdaten $V_{A1_1}$ und $V_{A1_2}$ eines Brillenträgers für zumindest zwei unterschiedliche Objektentfernungen $A1_1$ und $A1_2$ $(A1_1 \neq A1_2)$ zu erfassen, wobei die Verordnungsdaten Daten bezüglich der sphärischen Wirkung $Sph_V$, des Betrags des Astigmatismus $Zyl_V$ und der Astigmatismusachse $Achse_V$ für zumindest zwei unterschiedliche Objektentfernungen $A1_1$ und $A1_2$ $(A1_1 \neq A1_2)$ umfassen;
Objektabstandsmodellvorgabemittel, welche ausgelegt sind, ein Objektabstandsmodell $A1(x,y)$ vorzugeben, wobei $A1$ die Objektentfernung und $(x,y)$ eine Durchblickstelle bzw. einen Durchblickpunkt des Brillenglases in einer vorgegeben oder vorgebbaren Blickrichtung bezeichnen;

Verordnungsmodellvorgabemittel, welche ausgelegt sind, eine Funktion $P_{Ref} = f(A1)$, welche die Abhängigkeit eines

$$\mathbf{P}_{Ref} = \begin{pmatrix} M^{Ref} \\ J^{Ref}_{\ 0} \\ J^{Ref}_{\ 45} \end{pmatrix}$$

Powervektors der Verordnung von der Objektentfernung $A1$ beschreibt, vorzugeben, wobei

$$M^{Ref} = Sph_V + \frac{Zyl_V}{2}$$

$$J^{Ref}_{\ 0} = -\frac{Zyl_V}{2} \cos 2 Achse_V \ ;$$

$$J^{Ref}_{\ 45} = -\frac{Zyl_V}{2} \sin 2 Achse_V$$

Verordnungsermittlungsmittel, welche ausgelegt sind, die Komponenten des Powervektors $P_{Ref}$ der Verordnung in einer Mehrzahl an Durchblickstellen $(x,y)$ anhand des Objektabstandsmodells $A1(x,y)$ und der erfassten Verordnungsdaten $V_{A1_1}$ und $V_{A1_2}$ zu ermitteln,

Berechnungs- oder Optimierungsmittel, welche ausgelegt sind, zumindest eine Fläche des Brillenglases unter Berücksichtigung der ermittelten Komponenten des Powervektors $P_{Ref}$ der Verordnung in den Durchblickstellen $(x,y)$ zu berechnen oder zu optimieren.

Die zweite Fläche des Brillenglases kann eine vorgegebene oder vorgebare Fläche sein, zum Beispiel eine einfache sphärische oder rotationssymmetrische asphärische Fläche. Es ist selbstverständlich möglich, beide Flächen des Brillenglases unter Berücksichtigung der ermittelten blickwinkel- bzw. blickrichtungsabhängigen Verordnung zu optimieren.

Die Optimierungs- bzw. Berechnungsmittel und die Verordnungsermittlungsmittel können mittels geeignet konfigurierten bzw. programmierten Computern, spezialisierter Hardware und/oder Computernetze bzw. Computersysteme etc. implementiert werden. Es ist möglich, dass der gleiche Computer bzw. das gleiche Computersystem derart konfiguriert bzw. programmiert ist, sowohl die Berechnung oder das Ermitteln der Verordnung in den Durchblickstellen $(x,y)$ als auch die Berechnung bzw. Optimierung des Brillenglases unter Berücksichtigung der ermittelten Verordnung durchzuführen. Es ist jedoch selbstverständlich auch möglich, dass die Berechnung bzw. Optimierung des Brillenglases beispielsweise in separaten Computern oder Computersystemen erfolgen.

Die Optimierungs- bzw. Berechnungsmittel, Verordnungsermittlungsmittel, Objektabstandsmodellvorgabemittel, Verordnungsmodellvorgabemittel, Verordnungsdatenerfassungsmittel können mittels geeigneter Schnittstellen in Signalverbindung mit entsprechenden Speichern stehen und insbesondere die in dem Speicher gespeicherten Daten auslesen und/oder modifizieren. Die Verordnungsdatenerfassungsmittel können ferner eine vorzugsweise interaktive grafische Benutzerschnittstelle (GUI) umfassen, welche es einem Benutzer ermöglicht, entsprechende Daten einzugeben und/oder zu modifizieren. Alle Berechnungen erfolgen vorzugsweise in Echtzeit.

Ein weiterer Aspekt der Erfindung betrifft ein Computerprogrammerzeugnis sowie ein Speichermedium mit darauf gespeichertem Computerprogramm, wobei das Computerprogramm bzw. das Computerprogrammerzeugnis ausgelegt ist, wenn geladen und ausgeführt auf einem Computer, ein Ausführungsbeispiel des Verfahrens zum Berechnen oder Optimieren eines Brillenglases durchzuführen.

Ein weiterer Aspekt der Erfindung betrifft ein Verfahren zum Herstellen eines Brillenglases umfassend:

Berechnen oder Optimieren eines Brillenglases nach einem Ausführungsbeispiel des Verfahrens zum Berechnen oder Optimieren eines Brillenglases;

Fertigen des so berechneten oder optimierten Brillenglases.

Insbesondere umfasst das Berechnen oder Optimieren des Brillenglases ein Bereitstellen von Flächendaten des nach einem Beispiel des Verfahrens zum Berechnen oder Optimieren eines Brillenglases berechneten oder optimierten Brillenglases. Wie bereits oben beschrieben wurde kann eine der beiden Flächen des Brillenglases (z.B. die Vorderfläche) eine vorgegebene Fläche sein, z.B. eine sphärische oder rotationssymmetrische asphärische Fläche. Die andere Fläche (z.B. die Rückfläche) wird dann unter Berücksichtigung der blickrichtungs- bzw. blickwinkelabhängigen Verordnung optimiert oder berechnet.

Gemäß einem weiteren Aspekt der Erfindung wird eine Vorrichtung zum Herstellen eines Brillenglases vorgeschlagen. Die Vorrichtung umfasst:

Berechnungs- oder Optimierungsmittel, welche ausgelegt sind, das Brillenglas nach einem bevorzugten Ausführungsbeispiel des Verfahrens zum Berechnen oder Optimieren eines Brillenglases zu berechnen oder zu optimieren; Bearbeitungsmittel, welche ausgelegt sind, das Brillenglas fertig zu bearbeiten.

Insbesondere umfasst die Vorrichtung zum Herstellen eines Brillenglases Flächendatenbereitstellungsmittel, welche ausgelegt sind, Flächendaten des nach einem Beispiel des Verfahrens zum Berechnen oder Optimieren eines Brillenglases berechneten oder optimierten Brillenglases bereitzustellen.

Die Bearbeitungsmittel zum fertig Bearbeiten des Brillenglases können z.B. CNC gesteuerte Maschinen zur Direktbearbeitung eines Blanks nach den ermittelten Optimierungsvorgaben umfassen. Alternativ kann das Brillenglas mittels eines Gießverfahrens gefertigt werden. Vorzugsweise weist das fertig bearbeitete Brillenglas eine einfache sphärische oder rotationssymmetrisch asphärische Fläche und eine nach den erfindungsgemäß berechneten Designvorgaben sowie individuellen Parametern des Brillenträgers optimierte (z.B. asphärische oder progressive) Fläche auf. Vorzugsweise ist die einfache sphärische oder rotationssymmetrisch asphärische Fläche die Vorderfläche (d.h. die objektseitigen Fläche) des Brillenglases. Selbstverständlich ist es jedoch möglich, die nach dem berechneten Design optimierte Fläche als Vorderfläche des Brillenglases anzuordnen.

Ebenfalls kann die Vorrichtung zum Herstellen eines progressiven Brillenglases ferner Erfassungsmittel zum Erfassen von individuellen Daten des Brillenträgers umfassen. Die Erfassungsmittel können insbesondere grafische Benutzerschnittstellen umfassen.

Bevorzugte Ausführungsformen der Erfindung werden nachfolgend unter Bezugnahme auf die Figuren beispielhaft beschrieben.

Es zeigen:

Fig. 1 Flussdiagram eines beispielhaftes Verfahrens zum Optimieren eines individuellen Brillenglases gemäß einem Ausführungsbeispiel der Erfindung;

Fig. 2 ein Beispiel eines herkömmlich optimierten, individuellen progressiven Brillenglases; und

Fig. 3 ein Beispiel eines individuellen progressiven Brillenglases, welches gemäß einem bevorzugten Aspekt der Erfindung optimiert worden ist;

Fig. 4 Sphäre gemäß der Verordnung als Funktion der Entfernung bei einem Vergleichsbeispiel gemäß dem Stand der Technik und bei einem Beispiel gemäß der Erfindung;

Fig. 5 Zylinderbetrag gemäß der Verordnung als Funktion der Entfernung bei einem Vergleichsbeispiel gemäß dem Stand der Technik und bei einem Beispiel gemäß der Erfindung;

Fig. 6 Zylinderachse gemäß der Verordnung als Funktion der Entfernung bei einem Vergleichsbeispiel gemäß dem Stand der Technik und bei einem Beispiel gemäß der Erfindung;

Fig. 7 Sphärisches Äquivalent (Power) gemäß der Verordnung als Funktion der Entfernung bei einem Vergleichsbeispiel gemäß dem Stand der Technik und bei einem Beispiel gemäß der Erfindung;

Fig. 8 Übergang des Vektors $(J_0, J_{45})$ von der Refraktion 1 zur Refraktion 2 bei einem Vergleichsbeispiel gemäß dem Stand der Technik und bei einem Beispiel gemäß der Erfindung;

Fig. 9: Iso-Linien des Visus bei einem Brillenglas gemäß einem Vergleichsbeispiel, welches nach einem konventionellen Verfahren optimiert worden ist;

Fig. 10 Sehbereichsdarstellung des in Fig. 9 gezeigten Brillenglases;

Fig. 11 Iso-Linien des Visus bei einem Brillenglas, welches nach einem beispielhaften, erfindungsgemäßen Verfahren optimiert worden ist;

Fig. 12 Sehbereichsdarstellung des in Fig. 11 gezeigten Brillenglases.

Hierbei ist das Koordinatensystem das oben beschriebene Koordinatensystem der zu optimierenden (progressiven) Rückfläche. In den Figuren sind der Fernbezugspunkt $B_F$ und der Nahbezugspunkt $B_N$ jeweils als Kreise dargestellt.

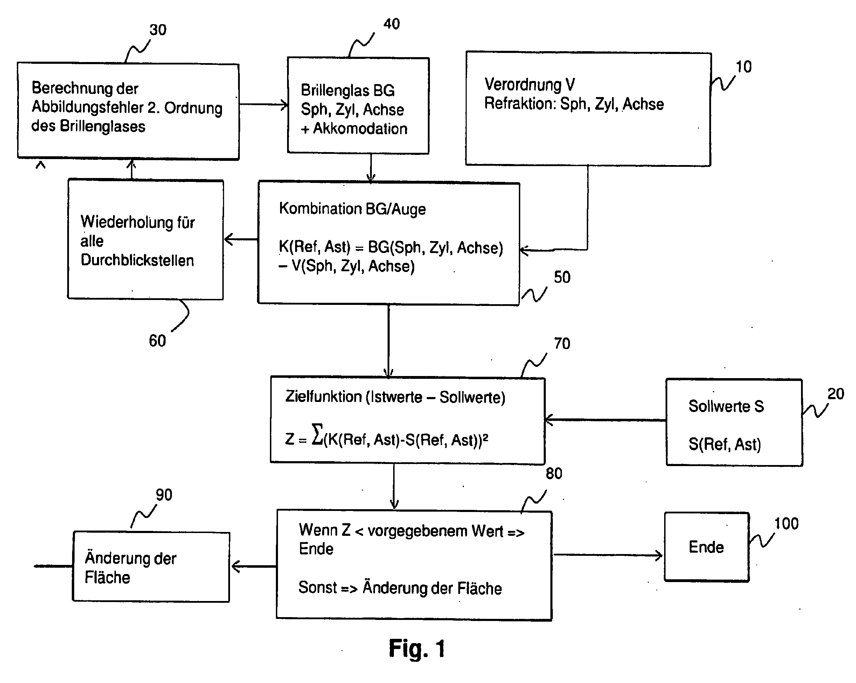

**Fig. 1** zeigt ein Flussdiagramm eines beispielhaften Verfahrens zum Optimieren eines individuellen progressiven Brillenglases gemäß einem Ausführungsbeispiel der Erfindung. Das Verfahren ist ebenfalls sinngemäß auf ein Einstärkenbrillenglas anwendbar.

Aus den übermittelten Verordnungsdaten 10 (z.B. $V(Sph, Zyl, Achse, Add) = Sph_V, Zyl_V, Achse_V, Add_V$) und den eventuell übermittelten Objektentfernungen oder den Entfernungen nach DIN (DIN 58208) wird ein Modell $Akk = f(A1)$ für den Akkommodationserfolg $Akk$ an der Scheitelpunktkugel als Funktion der Objektentfernung $A1$ (Kehrwert des

Objektabstands) bestimmt. Dies ist bevorzugt ein lineares Modell mit $Akk = f(A1) = a + b * A1$.

Beispielsweise hat der ECP eine Verordnung Ferne $Sph_V$ = +1,00 dpt bei einer Objektentfernung $A1_1 = A1_F$ = 0,00 dpt (unendlich) und eine Addition $Add_V$ = 2,00 dpt bei einer Objektentfernung $A1_2 = A1_N$ = -2,50 dpt (40 cm) bestimmt. Dann beträgt die Akkommodation in der Ferne $Akk_F$ bei der Objektentfernung $A1_F$ = 0,00 dpt definitionsgemäß auch $Akk_F$ = 0,00 dpt. Die Akkommodation in der Nähe $Akk_N$ bei der Objektentfernung $A1_N$ = -2,50 dpt beträgt $Akk_N = Add - A1_N$ = 0,50 dpt. Wird ein lineares Modell mit $Akk = f(A1) = a + b * A1$ vorgegeben bzw. festgelegt, so lassen sich die Koeffizienten $a$ und $b$ in einfacher Weise bestimmen. In diesem Fall beträgt $a$ = 0,00 dpt und $b$ = - 0,2.

Ebenfalls kann ein nicht-lineares Modell für die für den Akkommodationserfolg als Funktion der Objektentfernung festgelegt oder vorgegeben werden.

Als nächstes wird ein Objektabstandsmodell (oder Objektabstandsfunktion) vorgegeben, bei welchem für jede Durchblickstelle $(x,y)$ eine Objektentfernung $A1 = f(x,y)$ bestimmt wird. Besonders bevorzugt ist hierbei, wenn die Objektentfernung $A1(x_{BF}, y_{BF})$ im Fernbezugspunkt $B_F$ mit Koordinaten $(x_{BF}, y_{BF})$ der Objektentfernung $A1_F$ bei der Refraktionsentfernung entspricht $(A1(x_{BF}, y_{BF}) = A1_F)$ und die Objektentfernung $A1(x_{BN}, y_{BN})$ im Nahbezugspunkt $B_N$ mit Koordinaten $(x_{BN}, y_{BN})$ der Objektentfernung $A1_N$ bei der Refraktionsentfernung entspricht $(A1(x_{BN}, y_{BN}) = A1_N)$.

Die Objektentfernung hängt in der Regel sehr stark von der vertikalen y-Koordinate und weniger stark von der horizontalen x-Koordinate ab. Die Abhängigkeit der Objektentfernung von der $y$-Koordinate kann zum Beispiel mit einem linearen Modell beschrieben werden, wobei die Koeffizienten durch die beiden beschriebenen Bedingungen für die Bezugspunkte eindeutig bestimmt sind. Es ist auch möglich, die Abhängigkeit der Objektentfernung von der $y$-Koordinate durch eine nicht-lineare Funktion vorzugeben, wie z.B. eine Doppelasymptotenfunktion

$$A1(y) = b + a - \frac{a}{(1 + e^{c(y+d)})^m}$$

· Hierbei sind dann zwei Koeffizienten, in der Regel die Koeffizienten $b$ und $a$, durch die beiden beschriebenen Bedingungen für die Bezugspunkte bestimmt. Bei den anderen Koeffizienten hat sind nun noch Freiheitsgrade vorhanden, mit denen das Design des Brillenglases geändert werden kann.

Bezüglich der Abhängigkeit von der horizontalen x-Koordinate bieten sich auch Freiheitsgerade. Im einfachsten Fall kann gewählt werden, dass die Objektentfernung im Horizontalschnitt konstant ist oder man verwendet eine Parabel und lässt im Fernbereich die Objektentfernung mit Zunahme des Abstandes von der Glasmitte abnehmen und im Nahbereich zunehmen.

Für jede Durchblickstelle *(x,* y) /für jeden Durchblickpunkt *(x, y)* werden Sollwerte $S(Ref,Ast)$ (Sollwerte 20) für den astigmatischen Fehler *Ast* und den Refraktionsfehler *Ref* festgelegt.

Für jede vorgegebene oder vorgebbare Durchblickstelle (x, y) werden in einem nächsten Schritt mit einem geeigneten Berechnungsalgorithmus, bevorzugt mit Wavefronttracing, die Abbildungseigenschaften zweiter Ordnung $Sph_{BG}, Zyl_{BG}, Achse_{BG}$ unter Berücksichtigung der Objektentfernung $A1(x,y)$ berechnet (Schritt 30).

Aufgrund der festgelegten Funktion für den Akkommodationserfolg (d.h. des festgelegten Akkommodationsmodels) kann für jede Objektentfernung $A1(x,y)$ auch die Akkommodation $Akk(A1(x,y))$ berechnet werden. Der Wert der so berechneten Akkommodation an der jeweiligen Durchblickstelle (x, y) wird zu den berechneten Abbildungseigenschaften zweiter Ordnung an der Durchblickstelle (x, y) addiert (Schritt 40):

$$Sph_{BG} \rightarrow Sph_{BG} + Akk.$$

Die hieraus resultierenden Werte der Abbildungseigenschaften zweiter Ordnung des Brillenglases ($Sph_{BG}$ + $Akk$, $Ast_{BG}$, $Achse_{BG}$) stellen nun die Brillenglaswerte $BG(Sph, Zyl, Achse)$ dar.

Die Brillenglaswerte $BG(Sph, Zyl, Achse)$ werden in einem nächsten Schritt mit den Werten der Verordnung $V(Sph, Zyl, Achse)$ kombiniert und anhand dieser Kombination der Refraktionsfehler *Ref* und der astigmatische Fehler *Ast* berechnet (Schritt 50):

$$K(Ref, Ast) = BG(Sph, Zyl, Achse) - V(Sph, Zyl, Achse).$$

Vorzugsweise wird hierzu die Differenz $P_{Dif} = P_{BG+Akk} - P_{Ref}$ mit Hilfe von Vektoren P (nachfolgend Powervektoren genannt) gebildet, wobei ein Powervektor

P wie folgt definiert ist:

$$P = \begin{pmatrix} M \\ J_0 \\ J_{45} \end{pmatrix}, \quad \begin{aligned} M &= sph + \frac{zyl}{2} \\ J_0 &= -\frac{zyl}{2}\cos 2Achse \\ J_{45} &= -\frac{zyl}{2}\sin 2Achse \end{aligned}.$$

Somit gilt:

$$P_{BG+Akk} = \begin{pmatrix} M^{BG+Akk} \\ J_0^{BG+Akk} \\ J_{45}^{BG+Akk} \end{pmatrix},$$

wobei

$$M^{BG+Akk} = (Sph_{BG} + Akk) + \frac{Zyl_{BG}}{2}$$

$$J^{BG+Akk}_0 = -\frac{Zyl_{BG}}{2}\cos 2Achse_{BG}$$

$$J^{BG+Akk}_{45} = -\frac{Zyl_{BG}}{2}\sin 2Achse_{BG}$$

und

$$P_{Ref} = \begin{pmatrix} M^{Ref} \\ J^{Ref}_0 \\ J^{Ref}_{45} \end{pmatrix},$$

wobei

$$M^{Ref} = Sph_V + \frac{Zyl_V}{2}$$

$$J^{Ref}_0 = -\frac{Zyl_V}{2}\cos 2Achse_V .$$

$$J^{Ref}_{45} = -\frac{Zyl_V}{2}\sin 2Achse_V$$

Mit Hilfe der Powervektoren **P** ist es möglich, die Verordnungswerte und die Brillenglaswerte vektoriell (z.B.

nach der Kreuz-Zylinder Methode) zu addieren.

Aus den Komponenten des Powervektors $\mathbf{P}_{Dif}$, $\quad \mathbf{P}_{Dif} = \begin{pmatrix} M^{Dif} \\ J^{Dif}_0 \\ J^{Dif}_{45} \end{pmatrix}$ können der astigmatische Fehler *Ast* und der Refraktionsfehler *Ref* wie folgt berechnet werden:

$$Ast = -2\sqrt{J_0^2 + J_{45}^2} = -2\sqrt{J^{Dif}_0{}^2 + J^{Dif}_{45}{}^2} \; .$$

$$Ref = M = M^{Dif}$$

Die Berechnung des Refraktionsfehlers *Ref* und des astigmatischen Fehlers *Ast* wird für alle Durchblickstellen $(x, y)$ (für alle Durchblickpunkte $(x,y)$) wiederholt (Schritt 60).

In einem nächsten Schritt (Schritt 70) wird eine Zielfunktion *Z(Istwerte- Sollwerte)* berechnet, in welche die Werte des zuvor ermittelten Refraktionsfehlers *Ref* und astigmatischer Fehlers *Ast* und die Sollwerte für den Refraktionsfehler *Ref* und den astigmatischen Fehler *Ast* eingehen. Hierzu werden für alle Durchblickstellen/Durchblickpunkten die Abweichung des zuvor ermittelten Refraktionsfehlers *Ref* und die Abweichung des zuvor ermittelten astigmatischen Fehlers *Ast* von den entsprechenden Sollwerten *S(Ref,Ast)* berechnet.

In einer beispielhaften Zielfunktion können die Quadrate der Differenzen zur Fehlerquadratsumme aufsummiert werden:

$$Z = \sum_{i=1}^{N} (K(Ref, Ast) - S(Ref, Ast))_i^2 \; ,$$

wobei:

*K(Ref,Ast)* den Refraktionsfehler und den astigmatischen Fehler des Brillenglases bezeichnet; und
*S(Ref,Ast)* Sollwerte für den Refraktionsfehler und den astigmatischen Fehler bezeichnet; und
$i, i=1...N$ die *i*-te Durchblickstelle bezeichnet.

In einem nächsten Schritt (Schritt 80) wird die Zielfunktion Z ausgewertet. Liegt die Fehlerquadratsumme unter einem festgelegten Schwellenwert wird die Optimierung beendet (Schritt 100). Andernfalls wird mit einem geeigneten Optimierungsalgorithmus die Fläche des Brillenglases abgeändert (Schritt 90) und die Durchrechnung wieder neu gestartet (anders ausgedruckt werden Schritte 30 bis 80 erneut ausgeführt).

Nun kann - wie oben beschrieben - der Fall auftreten, dass es nicht ausreichend ist, nur eine Addition zu bestimmen, sondern dass es notwendig ist, auch in der Nähe Sphäre, Zylinder und Achse $Sph_V$, $Zyl_V$, $Achse_V$ vollständig zu bestimmen. Ursache hierfür kann beispielsweise eine Deformation der Augenlinse, des ganzen Auges oder eine Änderung des Pupillendurchmessers bei der Akkommodation sein. Gemäß einem Aspekt der Erfindung wird daher vorgeschlagen, im Optimierungsprozess die Verordnung nicht als festen Wert vorzugeben, sondern als eine Funktion der Objektentfernung *A*1.

Hat man beispielsweise eine Verordnung für die Ferne $Sph_{V_1}$ =+1,00 dpt, $Zyl_{V_1}$ = 1,00 dpt, $Achse_{V_1}$ 10° bei einer Objektentfernung $A1_1 = A1_F$ =0,00 dpt und in der Nähe $Sph_{V_2}$ = +3,00 dpt, $Zyl_{V_2}$ = 0,50 dpt, $Achse_{V_2}$ = 0° bei einer Objektentfernung $A1_2 = A1_N =$ = -2,50 dpt, so können hieraus zwei Powervektoren $\mathbf{P}_{V_1} = \mathbf{P}_{Feme}$ und $\mathbf{P}_{V_2} = \mathbf{P}_{Nähe}$ gebildet werden..

Um die unterschiedlichen Verordnungen zu berücksichtigen, kann ein Modell des Powervektors $\mathbf{P}_{Ref}$ als Funktion der Objektentfernung *A*1, vorzugsweise ein lineares Modell:

$$\mathbf{P}_{Ref} = f(A1) = a + b * A1$$

gebildet (bzw. festgelegt oder vorgegeben) werden.

Hierbei lassen sich der Koeffizientenvektor *a* und *b* aus der Verordnung für die Ferne und für die Nähe einfach bestimmen. In diesem Fall beträgt $\mathbf{P}_{Ferne}$ = (1,50; 0,47; 0,17)$^T$*dpt und $\mathbf{P}_{N\ddot{a}he}$ = (3,25; 0,25; 0,00)$^T$ *dpt, *a* = $P_{Ferne}$ und *b* = (-0,7;-0,1;-0,068)$^T$.

Die Addition kann ebenfalls gesondert berechnet werden. Wenn die Addition $Add_V$ in diesem Beispiel 2,00 dpt ist, dann beträgt $\mathbf{P}_{N\ddot{a}he}$ = (1,25; 0,25; 0,00)$^T$ *dpt,.

Es ist jedoch möglich, die Abhängigkeit der Verordnung bzw. des Powervektors $\mathbf{P}_{Ref}$ von der Objektentfernung *A*1 durch ein nicht lineares Model zu beschreiben. Im Allgemeinen gilt $\mathbf{P}_{Ref}$ = *f*(*A*1).

Mit dem oben beschriebenen Verfahren lässt sich für jede Objektentfernung und Blickrichtung eine Verordnung berechnen. Das progressive Brillenglas wird dann unter Berücksichtigung der blickrichtungsabhängigen Verordnung optimiert.

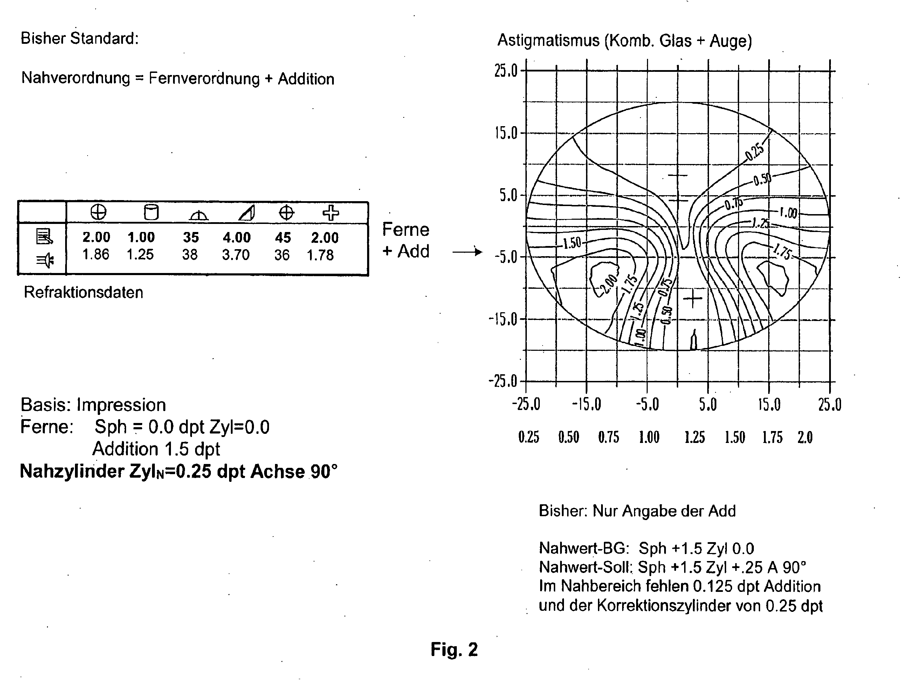

**Fig. 2** zeigt die Verteilung des Astigmatismus in Gebrauchsstellung eines individuellen progressiven Brillenglases, welches unter Berücksichtigung von festen Verordnungswerten $Sph_V$, $Ast_V$, $Achse_V$, $Add_V$ optimiert worden ist. Die Refraktions- bzw. Verordnungsdaten, welche dem Brillenglashersteller übermittelt und bei der Optimierung des Brillenglases berücksichtigt worden sind, sind Sphäre $Sph_V$ =0,0 dpt, Zylinder $Zyl_V$ = 0,0 dpt und Zylinderachse $Achse_V$ =0° für die Ferne und eine Addition $Add_V$ = 1,5 dpt. Das so berechnete Brillenglas weist im Nahbezugspunkt Werte von $Sph_{BG}$ =+1,5 dpt, $Zyl_{BG}$ = 0,0 dpt, $Achse_{BG}$ = 0° auf.

Bei einer genaueren Refraktionsbestimmung ergibt sich jedoch, dass der Brillenträger ebenfalls einen Nahzylinder $Zyl_{VN\ddot{a}he}$ von 0,25 dpt mit einer Zylinderachse $AchseV_{N\ddot{a}he}$ = 90° benötigt. Bei diesem herkömmlich optimierten Brillenglas, wobei zusätzlich zu den Refraktions- bzw. Verordnungswerten für die Ferne lediglich die Addition berücksichtigt wird, fehlen im Nahbereich folglich 0,125 dpt Addition und ein Korrekturzylinder von 0,25 dpt.

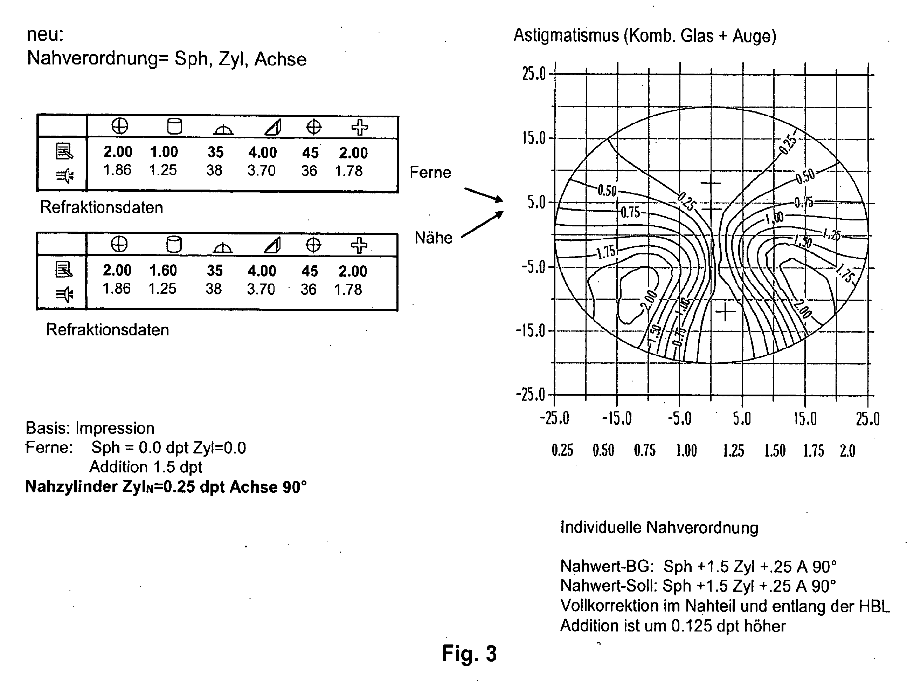

**Fig. 3** zeigt die Verteilung des Astigmatismus in Gebrauchsstellung eines individuellen progressiven Brillenglases, welches nach dem in Zusammenhang mit Fig. 1 beschriebenen Verfahren unter Berücksichtigung von blickrichtungsabhängigen Verordnungswerte optimiert worden ist. Die Refraktions- bzw. Verordnungsdaten für die Ferne, welche bei der Optimierung des Brillenglases berücksichtigt worden sind, entsprechen den Refraktions- bzw. Verordnungsdaten des in Fig. 2 gezeigten Beispiels, d.h. Sphäre $Sph_{V_1}$ = $Sph_{V_{Ferne}}$ = 0,0 dpt, Zylinder $Zyl_{V_1}$ = $Zyl_{V_{Ferne}}$ = 0,0 dpt und Zylinderachse $Achse_{V_1}$ = $Achse_{V_{Ferne}}$ = 0$^1$ für die Ferne (bei einer Objektentfernung $A1_F$ bei der Refraktionsbestimmung in der Ferne von 0,0 dpt, d.h. Unendlich). Die verordnete Addition $Add_V$ beträgt ebenfalls 1,5 dpt.

Zusätzlich wurde jedoch der durch Refraktionsbestimmung ermittelte Nahzylinder $Zyl_{V_2}$ = $Zyl_{VN\ddot{a}he}$ von 0,25 dpt mit einer Zylinderachse $Achse_{V_2}$ = $Achse_{VN\ddot{a}he}$ = 90° bei der Optimierung des Brillenglases berücksichtigt. Das so optimierte Brillenglas weist im Nahbezugspunkt Werte von $Sph_{BG}$ =+1,5 dpt, $Zyl_{BG}$ = +0,25 dpt, $A_{BC}$ = 90° auf. Diese Werte entsprechen den durch Refraktionsbestimmung ermittelten Werten für die Nähe. Im Nahteil und entlang der Hauptblicklinie HBL wird eine Vollkorrektion erreicht. Die Addition dieses Brillenglases ist um 0,125 dpt höher als die Addition des in Fig. 2 gezeigten Brillenglases.

Wie bereits oben ausgeführt, wird anhand der erfassten Verordnungswerte für die Ferne und für die Nähe und das vorgegebene Modell für die Verordnung als Funktion der Objektentfernung, die Verordnung (beschrieben durch einen Powervektor) in einer Mehrzahl von Durchblickpunkte (*x*, *y*) ermittelt. Die Verordnung ist somit eine Funktion der Blickrichtung.

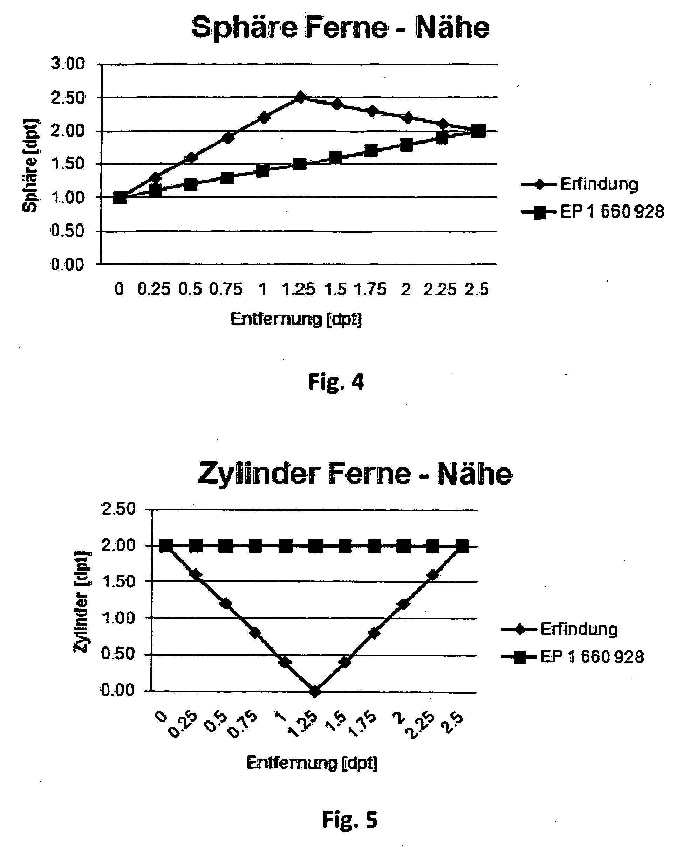

**Fig. 4 bis 8** zeigen die Abhängigkeit der unterschiedlichen Komponenten der Verordnung (Sphäre, Zylinder, Achse, etc.) von der Objektentfernung bei einem Vergleichsbeispiel gemäß dem Stand der Technik und nach einem Ausführungsbeispiel der Erfindung. Insbesondere zeigen Fig. 4 bis 8 den Übergang zwischen Ferne und Nähe:

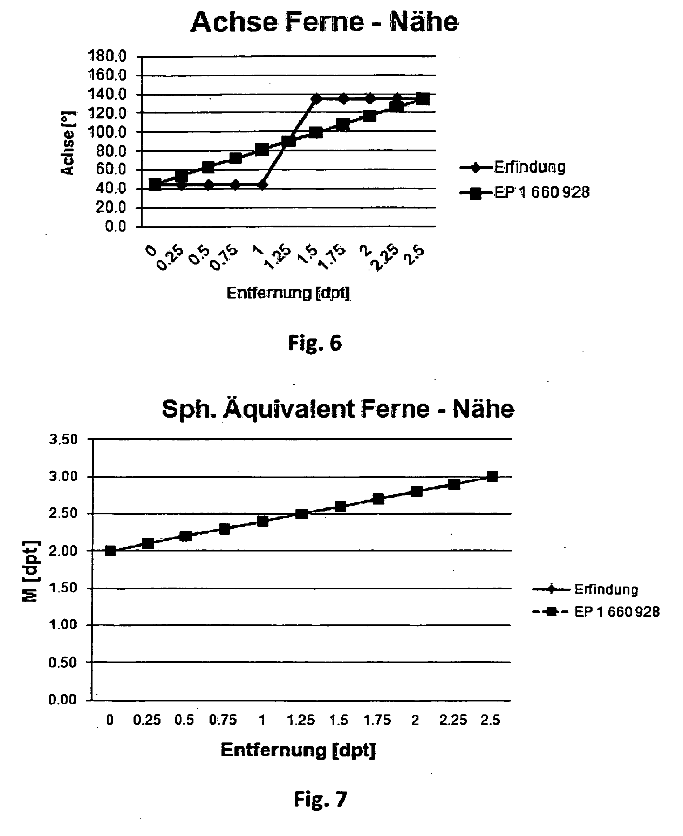

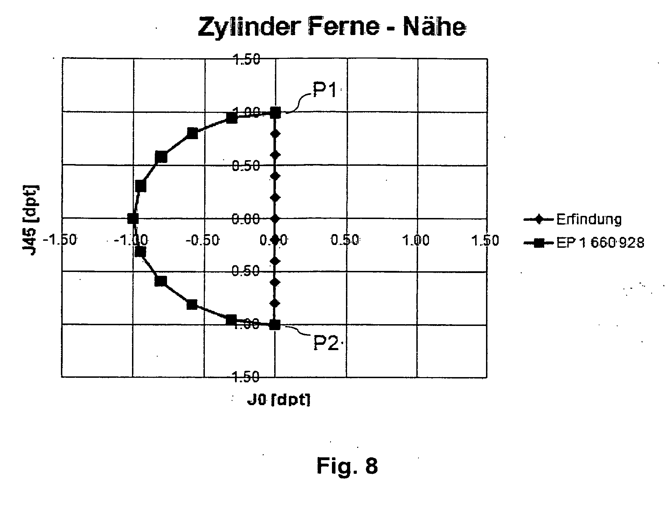

- der sphärischen Wirkung gemäß der Verordnung **(Fig. 4)**;
- des Betrages des Astigmatismus (bzw. des Zylinders) gemäß der Verordnung **(Fig. 5)**;
- der Achslage gemäß der Verordnung **(Fig. 6)**,
- des sphärische Äquivalents M **(Fig. 7)**; und
- der zylindrischen Wirkung (J0,J45) **(Fig. 8)**.

Bei dem Vergleichsbeispiel werden der Betrag und die Achslage des Astigmatismus gemäß der Verordnung jeweils getrennt voneinander als Funktionen der Blicksenkung vorgegeben oder modelliert, wie z.B. in EP 1 660 928/US 7,249,850 beschrieben. Es erfolgt somit ein getrennter Übergang von der Ferne zur Nähe sowohl für den Betrag als auch für die Achslage des Astigmatismus/Zylinders, jeweils als Funktionen der Blicksenkung oder des Blickwinkels. Die Verordnungswerte Sphäre (Sph), Zylinder (Zyl) und Achse folgen den kürzesten Verbindungen zwischen Ferne und Nähe und werden deshalb in den jeweiligen Darstellungen durch Geraden abgebildet (siehe Fig. 4 bis 6).

Es hat sich jedoch gezeigt, dass es vorteilhaft ist, wenn die Addition und Subtraktion nicht über die Komponenten Sphäre (Sph), Zylinder (Zyl) und Achse, sondern über Powervektoren $\mathbf{P} = \begin{pmatrix} M \\ J_0 \\ J_{45} \end{pmatrix}$ mit Komponenten

$$M = sph + \frac{zyl}{2} \, , \; J_{45} = -\frac{zyl}{2}\cos 2A \text{ und } J_{45} = -\frac{zyl}{2}\sin 2A \text{ erfolgt. Gemäß einem bevorzugten Aus-}$$

führungsbeispiel der Erfindung erfolgt daher der Übergang von der Ferne zur Nähe immer entlang der kürzesten Verbindung im zwei-dimensionalen Vektorraum, der durch die zwei Komponenten $(J_0, J_{45})$ oder besonders bevorzugt im drei-dimensionalen Vektorraum, der durch die drei Komponenten $(M, J_0, J_{45})$ des Powervektors $\mathbf{P} = \begin{pmatrix} M \\ J_0 \\ J_{45} \end{pmatrix}$ aufgespannt wird.

**Fig. 8** zeigt den Übergang des Vektors $(J^{Ref}_0, J^{Ref}_{45})$ von der Refraktion 1 (die Refraktion bei einer ersten Objektentfernung $A1_1$, z.B. in der Ferne) zur Refraktion 2 (die Refraktion bei einer zweiten Objektentfernung $A1_2$, z.B. in der Nähe). In Fig. 8 sind die Punkte P1 und P2 jeweils Punkte mit Koordinaten:

$P1 = P1(J^{Ref}_0(A1_1), J^{Ref}_{45}(A1_1))$; und
$P2 = P2(J^{Ref}_0(A1_2), J^{Ref}_{45}(A1_2))$.

Hier zeigt sich nach dem bevorzugten Ausführungsbeispiel der Erfindung immer ein geradliniger Übergang. Der Übergang von der Ferne zur Nähe bei dem Vergleichsbeispiel ist dagegen nicht geradlinig und folgt nicht der kürzesten Verbindung zwischen Ferne und Nähe.
Wenn sich lediglich der Betrag des Astigmatismus beim Blicken von der Ferne zur Nähe verändern soll, wogegen die Achslage konstant bleibt, liefern das aus EP 1 660 928/US 7,249,850 bekannte Verfahren (Vergleichsbeispiel) und das Verfahren gemäß dem Ausführungsbeispiel der Erfindung die gleichen Ergebnisse. Wenn jedoch zusätzlich die Veränderung der Achslage des Astigmatismus berücksichtigt wird, ergeben sich zwischen den beiden Modellen zum Teil erhebliche Unterschiede.
Die größten Unterschiede zwischen den Modellen für den Verordnungsastigmatismus als Funktion der Objektentfernung bzw. der Blickrichtung/des Blickwinkels nach EP 1 660 928/US 7,249,850 und gemäß dem Ausführungsbeispiel der Erfindung ergeben sich, wenn der Betrag des Astigmatismus konstant bleibt und sich lediglich die Achslage ändert. Dies kann anhand des folgenden Beispiels illustriert werden:

Die ermittelten Verordnungswerte/Refraktionswerte für die Ferne und für die Nähe sind jeweils:

Ferne: Zyl = 2 dpt; Achse = 45°
Nähe: Zyl = 2 dpt; Achse = 135°

Bei einer Objektentfernung von 1,25 dpt ergeben sich nach dem aus EP 1 660 928/US 7,249,850 bekannten Modell für die Verordnung die Werte Zyl = 2 dpt; Achse = 90°. Nach dem Verfahren gemäß einem bevorzugten Ausführungsbeispiel der Erfindung ergibt sich bei einer Objektentfernung von 1,25 dpt der Wert Zyl = 0 dpt.

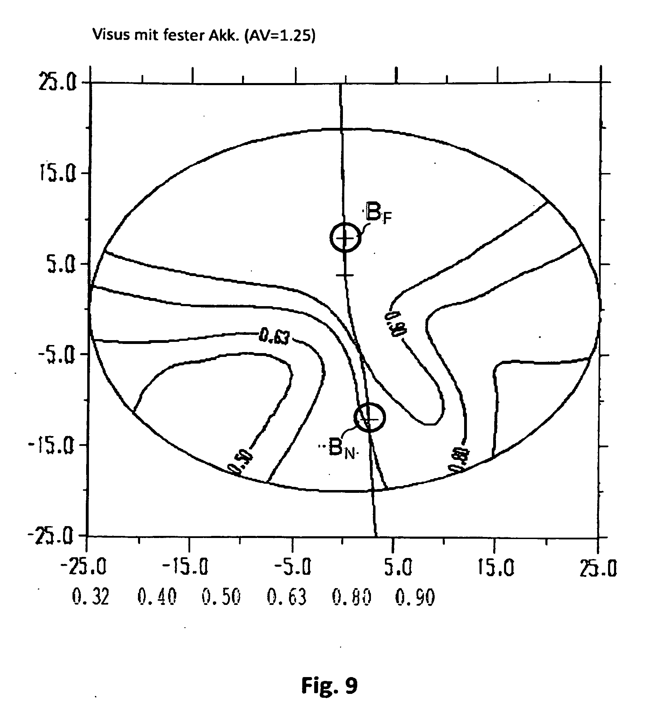

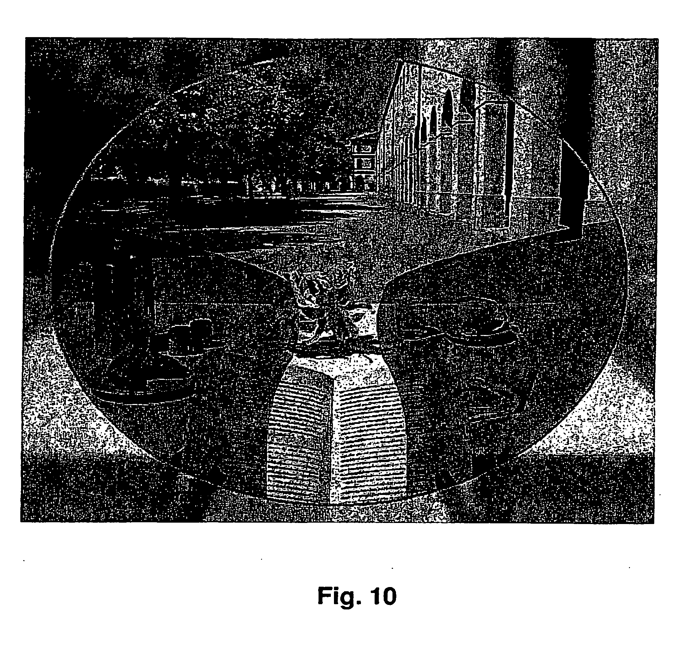

**Fig. 9** und **Fig. 10** zeigen jeweils die Iso-Linien des Visus und die entsprechende Sehbereichsdarstellung bei einem Brillenglas gemäß einem Vergleichsbeispiel, welches nach einem konventionellen Verfahren unter Berücksichtigung der astigmatischen Verordnungswerte für die Ferne optimiert worden ist. In diesem Fall sind die ermittelten Refraktionswerte für die Ferne und für die Nähe:

Ferne: Sph = 0,00 dpt; Zyl = 3,50 dpt; Achse = 10°
Nähe: Sph = 1,25 dpt; Zyl = 3,75 dpt; Achse = 16°.

Die entsprechenden Bestellwerte für das Brillenglas berücksichtigen lediglich den Astigmatismus für die Ferne und sind entsprechend:

Ferne: Sph = 0,00 dpt; Zyl = 3,50 dpt und Achse = 10°

Add = 1,50 dpt.

Die Gebrauchswerte eines Brillenglases, welches nach einem konventionellen Verfahren unter Berücksichtigung der astigmatischen Verordnungswerte für die Ferne optimiert worden ist, sind:

Ferne: Sph = 0,00 dpt; Zyl = 3,50 dpt, Achse = 10°
Nähe: Sph = 1,50 dpt; Zyl = 3,50 dpt, Achse = 10°.

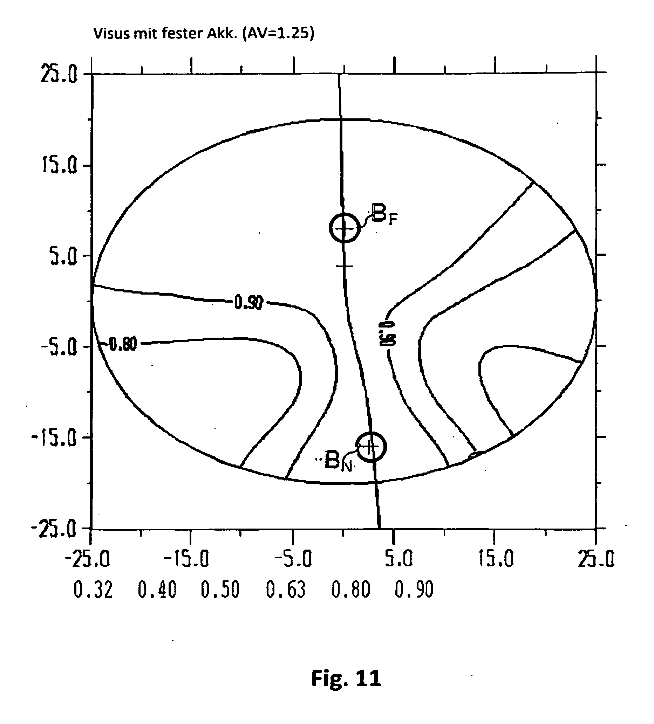

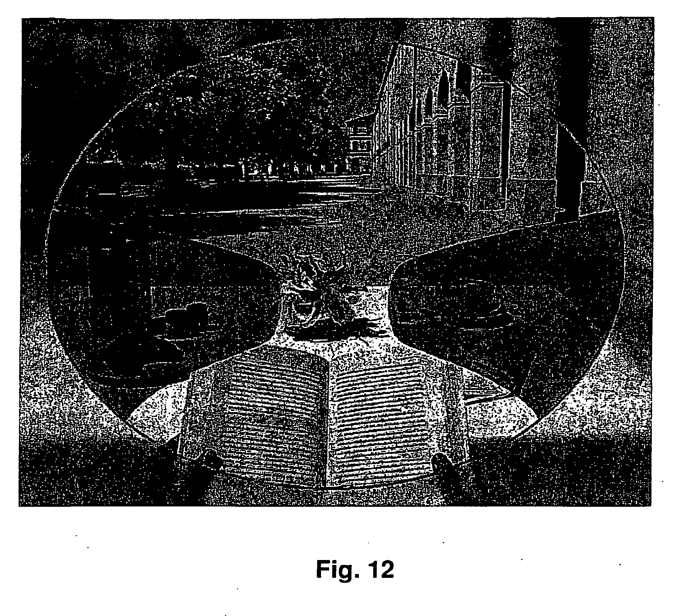

**Fig. 11** und **Fig. 12** zeigen jeweils die Iso-Linien des Visus und die entsprechende Sehbereichsdarstellung bei einem Brillenglas gemäß einem Ausführungsbeispiel der Erfindung. Das Brillenglas wird unter Berücksichtigung der astigmatischen Verordnungswerte für die Ferne und Nähe optimiert. Die ermittelten Refraktionswerte für die Ferne und für die Nähe sind bei diesem Ausführungsbeispiel die gleichen wie bei dem in Fig. 9 und 10 gezeigten Vergleichsbeispiel:

Ferne: Sph = 0,00 dpt; Zyl = 3,50 dpt; Achse = 10°
Nähe: Sph = 1,25 dpt; Zyl = 3,75 dpt; Achse = 16°.

Die entsprechenden Bestellwerte für das Brillenglas berücksichtigen jedoch sowohl den Astigmatismus für die Ferne als auch den Astigmatismus für die Nähe, welcher anhand der Refraktionsbestimmung ermittelt worden ist:

Ferne: Sph = 0,00 dpt; Zyl = 3,50 dpt und Achse = 10°
Nähe: Sph = 1,25 dpt; Zyl = 3,75 dpt und Achse = 16°.

Die Gebrauchswerte eines Brillenglases, welches nach einem bevorzugten Verfahren gemäß der Erfidnung unter Berücksichtigung der astigmatischen Verordnungswerte für die Ferne und Nähe optimiert worden ist, sind:

Ferne: Sph = 0,00 dpt; Zyl = 3,50 dpt und Achse = 10°
Nähe: Sph = 1,25 dpt; Zyl = 3,75 dpt und Achse = 16°.

Bei einem Vergleich der Fig. 9 und 10 mit den Fig. 11 und 12 ist eine deutliche Verbesserung des Visus im Nahbereich des Brillenglases, welches nach dem Verfahren gemäß dem Ausführungsbeispiel der Erfindung optimiert worden ist, ersichtlich.

**Legende der verwendeten Bezeichnungen**

| | |
|---|---|
| $Sph_V, Zyl_V, Achse_V, Add_V, Pr_V, B_V$ | Verordnungsdaten (Sphäre, Zylinder, Achse, Addition, Prisma, Basis) |
| $Sph_{BG}, Zyl_{BG}, Achse_{BG}$ | (korrigierte) Abbildungseigenschaften zweiter Ordnung des Brillenglases |
| $A1$ | Objektentfernung |
| $A1_F$ | Objektentfernung in der Ferne |
| $A1_N$ | Objektentfernung in der Nähe |
| $Akk$ | Akkommodation |
| $Akk_F$ | Akkommodation in der Ferne |
| $Akk_N$ | Akkommodation in der Nähe |
| $(x, y)$ | Durchblickstelle bzw. Durchblickpunkt in einer vorgegebenen oder vorgebbaren Blickrichtung |
| $(x_{BF}, y_{BF})$ | Koordinaten des Fernbezugspunkts $B_F$ |
| $(x_{BN}, y_{BN})$ | Koordinate des Nahbezugspunkts $B_N$ |
| $Ref$ | Refraktionsfehler |
| $Ast$ | astigmatischer Fehler |
| $S(Ref, Ast)$ | Sollwerte für den astigmatischen Fehler und den Refraktionsfehler |

**Patentansprüche**

**1.** Computerimplementiertes Verfahren zum Berechnen oder Optimieren eines Brillenglases umfassend die Schritte:

Erfassen von Verordnungs- bzw. Refraktionsdaten $V_{A1_1}$ und $V_{A12}$ eines Brillenträgers für zumindest zwei unterschiedliche Objektentfernungen $A1_1$ und $A1_2$ ($A1_1 \neq A1_2$), wobei die Verordnungsdaten Daten bezüglich der sphärischen Wirkung $Sph_V$, des Betrags des Astigmatismus $Zyl_V$ und der Astigmatismusachse $Achse_V$ für zumindest zwei unterschiedliche Objektentfernungen $A1_1$ und $A1_2$ umfassen;

Vorgabe eines Objektabstandsmodells $A1(x,y)$, wobei $A1$ die Objektentfernung und $(x,y)$ eine Durchblickstelle bzw. einen Durchblickpunkt des Brillenglases in einer vorgegeben oder vorgebbaren Blickrichtung bezeichnen;

Vorgabe einer Funktion $\mathbf{P}_{Ref} = f(A1)$, welche die Abhängigkeit eines Powervektors $\mathbf{P}_{Ref} = \begin{pmatrix} M^{Ref} \\ J^{Ref}{}_0 \\ J^{Ref}{}_{45} \end{pmatrix}$ der

Verordnung von der Objektentfernung $A1$ beschreibt, wobei

$$M^{Ref} = Sph_V + \frac{Zyl_V}{2}$$

$$J^{Ref}{}_0 = -\frac{Zyl_V}{2}\cos 2Achse_V \;,$$

$$J^{Ref}{}_{45} = -\frac{Zyl_V}{2}\sin 2Achse_V$$

wobei in einem zwei-dimensionalen Vektorraum, welcher durch die zwei Komponenten $J^{Ref}{}_0$ und $J^{Ref}{}_{45}$ des Powervektors $\mathbf{P}_{Ref}$ aufgespannt wird, der Übergang von einem ersten Punkt (P1) mit Koordinaten $(J^{Ref}{}_0(A1_1), J^{Ref}{}_{45}(A1_1))$ zu einem zweiten Punkt (P2) mit Koordinaten $(J^{Ref}{}_0(A1_2), J^{Ref}{}_{45}(A1_2))$ entlang der kürzesten Verbindung zwischen dem ersten (P1) und dem zweiten (P2) Punkt erfolgt; oder

wobei in einem drei-dimensionalen Vektorraum, welcher durch die drei Komponenten $M^{Ref}$, $J^{Ref}{}_0$ und $J^{Ref}{}_{45}$ des Powervektors $\mathbf{P}_{Ref}$ aufgespannt wird, der Übergang von einem ersten Punkt (P1) mit Koordinaten $(M^{Re}(A1_1), J^{Ref}{}_0(A1_1), J^{Ref}{}_{45}(A1_1))$ zu einem zweiten Punkt (P2) mit Koordinaten $(M^{Ref}(A1_2), J^{Ref}{}_0(A1_2), J^{Ref}{}_{45}(A1_2))$ entlang der kürzesten Verbindung zwischen dem ersten (P1) und dem zweiten Punkt (P2) erfolgt;

Ermitteln der Komponenten des Powervektors $\mathbf{P}_{Ref}$ der Verordnung in einer Mehrzahl an Durchblickstellen $(x, y)$ anhand des Objektabstandsmodells $A1(x, y)$ und der erfassten Verordnungsdaten $V_{A1_1}$ und $V_{A12}$,

Berechnen oder Optimieren zumindest einer Fläche des Brillenglases unter Berücksichtigung der ermittelten Komponenten des Powervektors $\mathbf{P}_{Ref}$ der Verordnung in den Durchblickstellen $(x, y)$.

2. Verfahren gemäß Anspruch 1, wobei der Powervektor $\mathbf{P}_{Ref}$ eine lineare Funktion der Objektentfernung $A1$ ist:

$$\mathbf{P}_{Ref}(x, y) = f(A1(x, y)) = a + b * A1(x, y),$$

und wobei $a$ und $b$ Konstanten sind, welche in Abhängigkeit von den erfassten Verordnungsdaten $Sph_V, Zyl_V, Achse_V$ für zumindest zwei unterschiedlichen Objektentfernungen $A1_1$ und $A1_2$ berechnet werden.

3. Verfahren gemäß Anspruch 1, wobei der Powervektor $\mathbf{P}_{Ref}$ eine nicht lineare Funktion der Objektentfernung $A1$ ist.

4. Verfahren gemäß einem der vorangegangenen Ansprüche, wobei das Berechnen oder Optimieren zumindest einer Fläche des Brillenglases eine Minimierung einer Zielfunktion

$$Z = \sum_{i=1}^{N} \left( K(Ref, Ast) - S(Ref, Ast) \right)_i^2,$$

umfasst, wobei:

i,i=1...N die i-te Durchblickstelle $(x, y)_i$ bezeichnet;
K(Ref,Ast) den Refraktionsfehler Ref und den astigmatischen Fehler Ast an der i-ten Durchblickstelle des Brillenglases bezeichnet; und
S(Ref, Ast) Sollwerte für den Refraktionsfehler Ref und den astigmatischen Fehler Ast an der i-ten Durchblickstelle des Brillenglases bezeichnet.

5. Verfahren gemäß Anspruch 4 umfassend einen Schritt der Vorgabe eines Akkommodationsmodells für den Akkommodationserfolg Akk als Funktion der Objektentfernung A1, wobei für den Refraktionsfehler Ref und den astigmatischen Fehler Ast gilt:

$$Ast = -2\sqrt{J^{Dif^2}_{\;0} + J^{Dif^2}_{\;45}},$$

$$Ref = M^{Dif}$$

wobei:

$$\mathbf{P}_{Dif} = \begin{pmatrix} M^{Dif} \\ J^{Dif}_{\;0} \\ J^{Dif}_{\;45} \end{pmatrix} = \mathbf{P}_{BG+Akk} - \mathbf{P}_{Ref},$$

$$\mathbf{P}_{BG+Akk} = \begin{pmatrix} M^{BG+Akk} \\ J_0^{\;BG+Akk} \\ J_{45}^{\;BG+Akk} \end{pmatrix},$$

$$M^{BG+Akk} = (Sph_{BG} + Akk) + \frac{Zyl_{BG}}{2}$$

$$J^{BG+Akk}_{\;0} = -\frac{Zyl_{BG}}{2}\cos 2 Achse_{BG},$$

und

$$J^{BG+Akk}{}_{45} = -\frac{Zyl_{BG}}{2}\sin 2Achse_{BG}$$

$Sph_{BG}, Zyl_{BG}, Achse_{BG}$ jeweils die Sphäre $Sph_{BG}$, den Betrag des Astigmatismus $Zyl_{BG}$ und die Astigmatismusachse $Achse_{BG}$ eines Brillenglases in Gebrauchsstellung bezeichnen.

6. Verfahren gemäß Anspruch 5, wobei der Akkommodationserfolg *Akk* eine lineare Funktion der Objektentfernung *A*1 ist.

7. Verfahren gemäß einem der vorangegangenen Ansprüche, wobei die Abhängigkeit der Objektentfernung $A1(y)$ von der vertikalen Koordinate *y* durch eine lineare Funktion oder durch eine Doppelasymptotenfunktion beschrieben wird.

8. Verfahren gemäß einem der vorangegangenen Ansprüche, wobei die Abhängigkeit der Objektentfernung $A1(x)$ von der horizontalen Koordinate x durch eine lineare Funktion oder durch eine quadratische Funktion des Abstands von der Glasmitte oder der Hauptlinie beschrieben wird.

9. Verfahren gemäß einem der vorangegangenen Ansprüche, wobei das zu optimierende Brillenglas ein progressives Brillenglas ist.

10. Vorrichtung zum Berechnen oder Optimieren eines Brillenglases umfassend
Verordnungsdatenerfassungsmittel, welche ausgelegt sind, Verordnungs- bzw. Refraktionsdaten $V_{A1_1}$ und $V_{A1_2}$ eines Brillenträgers für zumindest zwei unterschiedliche Objektentfernungen $A1_1$ und $A1_2$ ($A1_1 \neq A1_2$) zu erfassen, wobei die Verordnungsdaten Daten bezüglich der sphärischen Wirkung $Sph_V$, des Betrags des Astigmatismus $Zyl_V$ und der Astigmatismusachse $Achse_V$ für zumindest zwei unterschiedliche Objektentfernungen $A1_1$ und $A1_2$ umfassen;
Objektabstandsmodellvorgabemittel, welche ausgelegt sind, ein Objektabstandsmodell $A1(x, y)$ vorzugeben, wobei $A1$ die Objektentfernung und $(x,y)$ eine Durchblickstelle bzw. einen Durchblickpunkt des Brillenglases in einer vorgegeben oder vorgebbaren Blickrichtung bezeichnen;
Verordnungsmodellvorgabemittel, welche ausgelegt sind, eine Funktion $\mathbf{P}_{Ref} = f(A1)$, welche die Abhängigkeit eines

Powervektors
$$\mathbf{P}_{Ref} = \begin{pmatrix} M^{Ref} \\ J^{Ref}{}_0 \\ J^{Ref}{}_{45} \end{pmatrix}$$
der Verordnung von der Objektentfernung $A1$ beschreibt, vorzugeben, wobei

$$M^{Ref} = Sph_V + \frac{Zyl_V}{2}$$

$$J^{Ref}{}_0 = -\frac{Zyl_V}{2}\cos 2Achse_V \ ;$$

$$J^{Ref}{}_{45} = -\frac{Zyl_V}{2}\sin 2Achse_V$$

wobei in einem zwei-dimensionalen Vektorraum, welcher durch die zwei Komponenten $J^{Ref}{}_0$ und $J^{Ref}{}_{45}$ des Powervektors $\mathbf{P}_{Ref}$ aufgespannt wird, der Übergang von einem ersten Punkt (P1) mit Koordinaten $(J^{Ref}{}_0(A1_1), J^{Ref}{}_{45}(A1_1))$ zu einem zweiten Punkt (P2) mit Koordinaten $(J^{Ref}{}_0(A1_2), J^{Ref}{}_{45}(A1_2))$ entlang der kürzesten Verbindung zwischen dem ersten (P1) und dem zweiten (P2) Punkt erfolgt; oder

wobei in einem drei-dimensionalen Vektorraum, welcher durch die drei Komponenten $M^{Ref}$, $J^{Ref}_0$ und $J^{Ref}_{45}$ des Powervektors $\mathbf{P}_{Ref}$ aufgespannt wird, der Übergang von einem ersten Punkt (P1) mit Koordinaten $(M^{Ref}(A1_1), J^{Ref}_0(A1_1), J^{Ref}_{45}(A1_1))$ zu einem zweiten Punkt (P2) mit Koordinaten $(M^{Ref}(A1_2), J^{Ref}_0(A1_2), J^{Ref}_{45}(A1_2))$ entlang der kürzesten Verbindung zwischen dem ersten (P1) und dem zweiten Punkt (P2) erfolgt;

Verordnungsermittlungsmittel, welche ausgelegt sind, die Komponenten des Powervektors $\mathbf{P}_{Ref}$ der Verordnung in einer Mehrzahl an Durchblickstellen (x, y) anhand des Objektabstandsmodells $A1(x, y)$ und der erfassten Verordnungsdaten $V_{A1_1}$ und $V_{A1_2}$ zu ermitteln,

Berechnungs- oder Optimierungsmittel, welche ausgelegt sind, zumindest eine Fläche des Brillenglases unter Berücksichtigung der ermittelten Komponenten des Powervektors $\mathbf{P}_{Ref}$ der Verordnung in den Durchblickstellen (x, y) zu berechnen oder zu optimieren.

11. Computerprogrammerzeugnis, welches ausgelegt ist, wenn geladen und ausgeführt auf einem Computer, ein Verfahren zum Berechnen oder Optimieren eines Brillenglases gemäß einem der Ansprüche 1 bis 9 durchzuführen.

12. Speichermedium mit darauf gespeichertem Computerprogramm, wobei das Computerprogramm ausgelegt ist, wenn geladen und ausgeführt auf einem Computer, ein Verfahren zum Berechnen oder Optimieren eines Brillenglases gemäß einem der Ansprüche 1 bis 9 durchzuführen.

13. Verfahren zum Herstellen eines Brillenglases umfassend:

Berechnen oder Optimieren eines Brillenglases nach dem Verfahren zum Berechnen oder Optimieren eines Brillenglases gemäß einem der Ansprüche 1 bis 9;
Fertigen des so berechneten oder optimierten Brillenglases.

14. Vorrichtung zum Herstellen eines Brillenglases umfassend:

Berechnungs- oder Optimierungsmittel, welche ausgelegt sind, das Brillenglas nach einem Verfahren zum Berechnen oder Optimieren eines Brillenglases gemäß einem der Ansprüche 1 bis 9 zu berechnen oder zu optimieren;
Bearbeitungsmittel, welche ausgelegt sind, das Brillenglas fertig zu bearbeiten.

**Claims**

1. Computer-implemented method for calculating or optimising a spectacle lens comprising the steps:

acquiring prescription and refraction data $V_{Al_1}$ and $V_{Al_2}$ of a spectacle wearer for at least two different object distances $A1_1$ and $A1_2$ ($A1_1 \neq A1_2$), wherein the prescription data comprise data relating to the sphere power $Sph_v$, the amount of astigmatism $Zyl_v$ and the astigmatism axis $Axis_v$ for at least two different object distances $A1_1$ and $A1_2$;
specifying an object distance model $Al(x,y)$, wherein A1 denotes the object distance and (x,y) denotes a viewing location or a viewing point of the spectacle lens in a predetermined or predeterminable viewing direction;

specifying a function $P_{Ref} = f(A1)$, which describes the dependence of a power vector $P_{Ref} = \begin{pmatrix} M^{Ref} \\ J^{Ref_0} \\ J^{Ref_{45}} \end{pmatrix}$ on

the prescription of the object distance A1, wherein

$$M^{Ref} = Sph_v + \frac{Zyl_v}{2}$$

$$J^{Ref_0} = -\frac{Zyl_v}{2} \cos 2Axis_v$$

$$J^{Ref_{45}} = -\frac{Zyl_v}{2}\operatorname{sine} 2Axis_v$$

wherein in a two-dimensional vector space, which is spanned by two components $J^{Ref_0}$ and $J^{Ref_{45}}$ of the power vector $P_{Ref}$, the transition from a first point (P1) with coordinates ($J^{Ref_0}(A1_1),J^{Ref_{45}}(A1_1)$) to a second point (P2) with coordinates ($J^{Ref_0}(A1_2),J^{Ref_{45}}(A1_2)$) occurs along the shortest connection between the first (P1) and the second (P2) point; or

wherein in a three-dimensional vector space, which is spanned by the three components $M^{Ref}$, $J^{Ref_0}$ and $J^{Ref_{45}}$ of the power vector $P_{Ref}$, the transition from a first point (P1) with coordinates ($M^{Ref}(A1_1),J^{Ref_0}(A1_1),J^{Ref_{45}}(A1_1)$) to a second point (P2) with coordinates ($M^{Ref}(A1_1),J^{Ref_0}(A1_2),J^{Ref_{45}}(A1_2)$) occurs along the shortest connection between the first (P1) and the second (P2) point;

determining the components of the power vector $P_{Ref}$ of the prescription in a multiplicity of viewing locations (x,y) on the basis of the object distance model (A1(x,y) and the acquired prescription data $V_{A1_1}$ and $V_{A1_2}$,

calculating or optimising at least one surface of the spectacle lens taking into consideration the determined components of the power vector $P_{Ref}$ of the prescription in the viewing locations (x,y).

2. Method according to claim 1, wherein the power vector $P_{Ref}$ is a linear function of the object distance *A1*:

$$P_{Ref}\ (x,y) = f(A1(x,y)) = a + b*(A1(x,y),$$

and wherein *a* and *b* are constants, which are calculated in dependence on the acquired prescription data $Sph_v$, $Zyl_v$, $Axis_v$ for at least two different object distances $A1_1$ and $A1_2$.

3. Method according to claim 1, wherein the power vector $P_{Ref}$ is a non-linear function of the object distance A1.

4. Method according to one of the preceding claims, wherein the calculation or optimisation of at least one surface of the spectacle lens comprises a minimisation of a target function

$$Z = \sum_{i=1}^{N}(K(Ref,Ast) - S(Ref,Ast))_i^2$$

wherein:

*I, i=1...N* denotes the i-th viewing location $(x,y)_i$;
*K(Ref, Ast)* denotes the refraction error *Ref* and the astigmatic error *Ast* at the i-th viewing location of the spectacle lens; and
*S(Ref, Ast)* denotes desired values for the refraction error *Ref* and the astigmatic error *Ast* at the i-th viewing location of the spectacle lens.

5. Method according to claim 4 comprising a step of specifying an accommodation model for the accommodation occurrence *Akk* as function of the object distance A1, wherein the following applies for the refraction error *Ref* and the astigmatic error *Ast*:

$$Ast = -2\sqrt{J^{Dif_0^2} + J^{Dif_{45}^2}}$$

$$Ref = M^{Dif}$$

wherein:

$$P_{Dif} = \begin{pmatrix} M^{Dif} \\ J^{Dif_0} \\ J^{Dif_{45}} \end{pmatrix} = P_{BG+Akk} - P_{Ref}$$

$$P_{BG+Akk} = \begin{pmatrix} M^{BG+Akk} \\ J_0{}^{BG+Akk} \\ J_{45}{}^{BG+Akk} \end{pmatrix}$$

$$M^{BG+Akk} = (Sph_{BG} + Akk) + \frac{Zyl_{BG}}{2}$$

$$J^{BG+Akk_0} = -\frac{Zyl_{BG}}{2} cos2\, Axis_{BG}$$

and

$$J^{BG+Akk_{45}} = -\frac{Zyl_{BG}}{2} sine2\, Axis_{BG}$$

$Sph_{BG}$, $Zyl_{BG}$, $Axis_{BG}$ respectively denote the sphere $Sph_{BG}$, the amount of astigmatism $Zyl_{BG}$ and the astigmatism axis $Axis_{BG}$ of a spectacle lens in the position of use.

6. Method according to claim 5, wherein the accommodation occurrent $Akk$ is a linear function of the object distance A1.

7. Method according to one of the preceding claims, wherein the dependence of the object distance (A1(y) on the vertical coordinate y is described by a linear function or by a double asymptote function.

8. Method according to one of the preceding claims, wherein the dependence of the object distance A1(x) on the horizontal coordinate x is described by a linear function or by a quadratic function of the distance from the centre of the lens or the principal line.

9. Method according to one of the preceding claims, wherein the spectacle lens to be optimised is a progressive spectacle lens.

10. Device for calculating or optimising a spectacle lens comprising means for acquiring prescription, which are designed to acquire prescription or refraction data $V_{A1_1}$ and $V_{A1_2}$ of a spectacle wearer for at least two different object distances $A1_1$ and $A1_2$ ($A1_1 \neq A1_2$), wherein the prescription data comprise data relating to the sphere power $Sph_v$, the amount of astigmatism $Zyl_v$ and the astigmatism axis $Axis_v$ for at least two different object distances $A1_1$ and $A1_2$;
means for specifying an object spacing model, which are designed to specify an object distance model A1(x,y), wherein A1 denotes the object distance and (x,y) denotes a viewing location or a viewing point of the spectacle lens in a predetermined or predeterminable viewing direction;
means for specifying a prescription model, which are designed to specify a function $P_{Ref} = f(A1)$, which describes

the dependence of a power vector $P_{Ref} := \begin{pmatrix} M^{Ref} \\ J^{Ref_0} \\ J^{Ref_{45}} \end{pmatrix}$ on the prescription on the object distance A1, wherein

$$M^{Ref} = Sph_v + \frac{Zyl_v}{2}$$

$$J^{Ref_0} = -\frac{Zyl_v}{2}\cos 2Axis_v$$

$$J^{Ref_{45}} = -\frac{Zyl_v}{2}\operatorname{sine} 2Axis_v$$

wherein in a two-dimensional vector space, which is spanned by two components $J^{Ref_0}$ and $J^{Ref_{45}}$ of the power vector $P_{Ref}$, the transition from a first point (P1) with coordinates ($J^{Ref_0}(A1_1),J^{Ref_{45}}(A1_1)$) to a second point (P2) with coordinates ($J^{Ref_0}(A1_2),J^{Ref_{45}}(A1_2)$) occurs along the shortest connection between the first (P1) and the second (P2) point; or

wherein in a three-dimensional vector space, which is spanned by the three components $M^{Ref}, J^{Ref_0}$ and $J^{Ref_{45}}$ of the power vector $P_{Ref}$, the transition from a first point (P1) with coordinates ($M^{Ref}(A1_1),J^{Ref_0}(A1_1),J^{Ref_{45}}(A1_1)$) to a second point (P2) with coordinates ($M^{Ref}(A1_1),J^{Ref_0}(A1_2),J^{Ref_{45}}(A1_2)$) occurs along the shortest connection between the first (P1) and the second (P2) point;

means for prescription determination, which are designed to determine the components of the power vector $P_{Ref}$ of the prescription in a multiplicity of viewing locations (x,y) on the basis of the object spacing model A1(x,y) and the acquired prescription data $V_{A1_1}$ and $V_{A1_2}$,

calculating or optimising means, which are designed to calculate or optimise at least one surface of the spectacle lens taking into consideration the determined components of the power vector $P_{Ref}$ of the prescription in the viewing locations (x,y).

**11.** Computer program product, which when loaded and executed on a computer is designed to perform a method for calculating or optimising a spectacle lens according to one of claims 1 to 9.

**12.** Storage medium with a computer program stored thereon, wherein when loaded and executed on a computer the computer program is designed to perform a method for calculating or optimising a spectacle lens according to one of claims 1 to 9.

**13.** Method for producing a spectacle lens comprising:

calculating or optimising a spectacle lens using the method for calculating or
optimising a spectacle lens according to one of claims 1 to 9;
fabricating the thus calculated or optimised spectacle lens.

**14.** Device for producing a spectacle lens comprising:

calculation or optimisation means, which are designed to calculate or optimise the spectacle lens using the method for calculating or optimising a spectacle lens according to one of claims 1 to 9;
machining means, which are designed to finish-machine the spectacle lens.

**Revendications**

**1.** Procédé mis en oeuvre par un ordinateur pour le calcul ou l'optimisation d'un verre de lunettes comportant les étapes suivantes :

détection de données de prescription ou de réfraction $VA1_1$ et $VA1_2$ d'un porteur de lunettes pour au moins deux distances d'objet différentes $A1_1$ et $A1_2$ ($A1_1 \neq A1_2$), où les données de prescription comprennent des données concernant l'effet sphérique Sphv, la valeur de l'astigmatisme Zylv et l'axe d'astigmatisme Achsev pour au moins deux distances d'objet différentes $A1_1$ et $A1_2$ ;
prédéfinition d'un modèle d'écart d'objets A1(x, y), où A1 désigne la distance d'objet et (x, y) désigne une zone de vision ou un point de vision du verre de lunettes dans une direction de vision prédéfinie ou pouvant être prédéfinie ;

prédéfinition d'une fonction $P_{Ref} = f(A1)$ qui décrit la dépendance d'un vecteur de puissance

$$\mathbf{P}_{Ref} = \begin{pmatrix} M^{Ref} \\ J^{Ref}{}_{0} \\ J^{Ref}{}_{45} \end{pmatrix}$$ de la prescription à la distance d'objet A1, où

$$M^{Ref} = Sph_V + \frac{Zyl_V}{2}$$

$$J^{Ref}{}_{0} = -\frac{Zyl_V}{2} \cos 2 Achse_V \; ,$$

$$J^{Ref}{}_{45} = -\frac{Zyl_V}{2} \sin 2 Achse_V$$

où, dans un espace vectoriel bidimensionnel qui est sous-tendu par les deux composantes $J^{Ref}{}_0$ et $J^{Ref}{}_{45}$ du vecteur de puissance $P_{Ref}$, la transition d'un premier point (P1) avec des coordonnées ($J^{Ref}{}_0(A1_1)$, $J^{Ref}{}_{45}(A1_1)$) à un second point (P2) avec des coordonnées ($J^{Ref}{}_0(A1_2)$, $J^{Ref}{}_{45}(A1_2)$) est effectuée le long de la plus courte liaison entre le premier point (P1) et le second point (P2) ; ou

où, dans un espace vectoriel tridimensionnel qui est sous-tendu par les trois composantes $M^{Ref}$, $J^{Ref}{}_0$ et $J^{Ref}{}_{45}$ du vecteur de puissance $P_{Ref}$, la transition d'un premier point (P1) avec des coordonnées ($M^{Ref}(A1_1)$, $J^{Ref}{}_0(A1_1)$, $J^{Ref}{}_{45}(A1_1)$) à un second point (P2) avec des coordonnées ($M^{Ref}(A1_2)$, $J^{Ref}{}_0(A1_2)$, $J^{Ref}{}_{45}(A1_2)$) est effectuée le long de la plus courte liaison entre le premier point (P1) et le second point (P2) ;

détermination des composantes du vecteur de puissance $P_{Ref}$ de la prescription dans une pluralité de zones de vision $(x, y)$ à l'aide du modèle d'écart d'objet $A1(x, y)$ et des données de prescription détectées $VA1_1$ et $VA1_2$ ;

calcul ou optimisation d'au moins une surface du verre de lunettes en tenant compte des composantes déterminées du vecteur de puissance $P_{Ref}$ de la prescription dans les zones de vision $(x, y)$.

2. Procédé selon la revendication 1, où le vecteur de puissance $P_{Ref}$ est une fonction linéaire de la distance d'objet A1 :

$$P_{Ref}(x, y) = f(A1(x, y)) = a + b^* A1(x, y),$$

et où a et b sont des constantes qui sont calculées en fonction des données de prescription détectées $Sph_V$, $Zyl_V$, $Achse_V$ pour au moins deux distances d'objet différentes $A1_1$ et $A1_2$.

3. Procédé selon la revendication 1, où le vecteur de puissance $P_{Ref}$ est une fonction non linéaire de la distance d'objet A1.

4. Procédé selon l'une quelconque des revendications précédentes, où le calcul ou l'optimisation d'au moins une surface du verre de lunettes comprend une minimisation d'une fonction objectif

$$Z = \sum_{i=1}^{N} \left( K(Ref, Ast) - S(Ref, Ast) \right)^2_i$$

où

i, i = 1...N désigne la i<sup>ème</sup> zone de vision $(x, y)_i$ ;

K(Ref, Ast) désigne l'erreur de réfraction Ref et l'erreur d'astigmatisme Ast à la i<sup>ème</sup> zone de vision du verre de lunettes ; et

S(Ref, Ast) désigne des valeurs de consigne pour l'erreur de réfraction Ref et pour l'erreur d'astigmatisme Ast à la i<sup>ème</sup> zone de vision du verre de lunettes.

**5.** Procédé selon la revendication 4 comprenant une étape de prédéfinition d'un modèle d'accommodation pour la réussite d'accommodation Akk en fonction de la distance d'objet A1, où s'applique pour l'erreur de réfraction Ref et pour l'erreur d'astigmatisme Ast :

$$Ast = -2\sqrt{J^{Dif}{}_0{}^2 + J^{Dif}{}_{45}{}^2},$$

$$Ref = M^{Dif}$$

où :

$$P_{\text{Dif}} = \begin{pmatrix} M^{Dif} \\ J^{Dif}{}_0 \\ J^{Dif}{}_{45} \end{pmatrix} = P_{\text{BG+Akk}} - P_{\text{Ref}},$$

$$P_{\text{BG+Akk}} = \begin{pmatrix} M^{BG+Akk} \\ J_0{}^{BG+Akk} \\ J_{45}{}^{BG+Akk} \end{pmatrix},$$

$$M^{BG+Akk} = (Sph_{BG} + Akk) + \frac{Zyl_{BG}}{2},$$

$$J^{BG+Akk}{}_0 = -\frac{Zyl_{BG}}{2}\cos 2Achse_{BG},$$

et

$$J^{BG+Akk}{}_{45} = -\frac{Zyl_{BG}}{2}\sin 2Achse_{BG}$$

$Sph_{BG}$, $Zyl_{BG}$, $Achse_{BG}$ désignent respectivement la sphère $Sph_{BG}$, la valeur de l'astigmatisme $Zyl_{BG}$ et l'axe d'astigmatisme $Achse_{BG}$ d'un verre de lunettes en position d'utilisation.

**6.** Procédé selon la revendication 5, où la réussite d'accommodation Akk est une fonction linéaire de la distance d'objet A1.

**7.** Procédé selon l'une quelconque des revendications précédentes, où la dépendance de la distance d'objet A1(y) aux coordonnées verticales y est décrite par une fonction linéaire ou par une double fonction asymptotique.

**8.** Procédé selon l'une quelconque des revendications précédentes, où la dépendance de la distance d'objet A1(x) aux coordonnées horizontales x est décrite par une fonction linéaire ou par une fonction quadratique de l'écart du milieu du verre ou de la ligne principale.

**9.** Procédé selon l'une quelconque des revendications précédentes, où le verre de lunettes à optimiser est un verre de lunettes progressif.

**10.** Dispositif de calcul ou d'optimisation d'un verre de lunettes comprenant

des moyens de détection de données de prescription, lesquels sont conçus pour détecter des données de prescription ou de réfraction $VA1_1$ et $VA1_2$ d'un porteur de lunettes pour au moins deux distances d'objet différentes $A1_1$ et $A1_2$ ($A1_1 \neq A1_2$), où les données de prescription comprennent des données concernant l'effet sphérique Sphv, la valeur de l'astigmatisme Zylv et l'axe d'astigmatisme Achsev pour au moins deux distances d'objet différentes $A1_1$ et $A1_2$ ;

des moyens de prédéfinition de modèle d'écart d'objet, lesquels sont conçus pour prédéfinir un modèle d'écart d'objet $A1(x, y)$, où A1 désigne la distance d'objet et $(x, y)$ désigne une zone de vision ou un point de vision du verre de lunettes dans une direction de vision prédéfinie ou pouvant être prédéfinie ;

des moyens de prédéfinition de modèle de prescription, lesquels sont conçus pour prédéfinir une fonction

$P_{Ref} = f(A1)$ qui décrit la dépendance d'un vecteur de puissance $P_{Ref} = \begin{pmatrix} M^{Ref} \\ J^{Ref}{}_0 \\ J^{Ref}{}_{45} \end{pmatrix}$ de la prescription à la distance d'objet A1, où

$$M^{Ref} = Sph_V + \frac{Zyl_V}{2}$$

$$J^{Ref}{}_0 = -\frac{Zyl_V}{2}\cos 2 Achse_V \; ;$$

$$J^{Ref}{}_{45} = -\frac{Zyl_V}{2}\sin 2 Achse_V$$

où, dans un espace vectoriel bidimensionnel qui est sous-tendu par les deux composantes $J^{Ref}{}_0$ et $J^{Ref}{}_{45}$ du vecteur de puissance $P_{Ref}$, la transition d'un premier point (P1) avec des coordonnées $(J^{Ref}{}_0(A1_1), J^{Ref}{}_{45}(A1_1))$ à un second point (P2) avec des coordonnées $(J^{Ref}{}_0(A1_2), J^{Ref}{}_{45}(A1_2))$ est effectuée le long de la plus courte liaison entre le premier point (P1) et le second point (P2) ; ou

où, dans un espace vectoriel tridimensionnel qui est sous-tendu par les trois composantes $M^{Ref}$, $J^{Ref}{}_0$ et $J^{Ref}{}_{45}$ du vecteur de puissance $P_{Ref}$, la transition d'un premier point (P1) avec des coordonnées $(M^{Ref}(A1_1), J^{Ref}{}_0(A1_1), J^{Ref}{}_{45}(A1_1))$ à un second point (P2) avec des coordonnées $(M^{Ref}(A1_2), J^{Ref}{}_0(A1_2), J^{Ref}{}_{45}(A1_2))$ est effectuée le long de la plus courte liaison entre le premier (P1) et le second point (P2) ;

des moyens de détermination de prescription, lesquels sont conçus pour déterminer les composantes du vecteur de puissance $P_{Ref}$ de la prescription dans une pluralité de zones de vision $(x,y)$ à l'aide du modèle d'écart d'objet $A1(x, y)$ et des données de prescription détectées $VA1_1$ et $VA1_2$,

des moyens de calcul ou d'optimisation, lesquels sont conçus pour calculer ou optimiser au moins une surface du verre de lunettes en tenant compte des composantes déterminées du vecteur de puissance $P_{Ref}$ de la prescription dans les zones de vision (x, y).

**11.** Produit-programme d'ordinateur, lequel est conçu, lorsqu'il est chargé et exécuté sur un ordinateur, pour effectuer un procédé de calcul ou d'optimisation d'un verre de lunettes selon l'une quelconque des revendications 1 à 9.

**12.** Support d'enregistrement sur lequel est enregistré un programme d'ordinateur, où le programme d'ordinateur est conçu, lorsqu'il est chargé et exécuté sur un ordinateur, pour effectuer un procédé de calcul ou d'optimisation d'un verre de lunettes selon l'une quelconque des revendications 1 à 9.

**13.** Procédé de production d'un verre de lunettes comprenant :

le calcul ou l'optimisation d'un verre de lunettes selon le procédé de calcul ou d'optimisation d'un verre de lunettes selon l'une quelconque des revendications 1 à 9 ;
la fabrication du verre de lunettes calculé ou optimisé de cette façon.

**14.** Dispositif de production d'un verre de lunettes comprenant :

des moyens de calcul ou d'optimisation, lesquels sont conçus pour calculer ou optimiser le verre de lunettes selon un procédé de calcul ou d'optimisation d'un verre de lunettes selon l'une quelconque des revendications 1 à 9 ;
des moyens d'usinage, lesquels sont conçus pour parachever le verre de lunettes.

**10** — Verordnung V
Refraktion: Sph, Zyl, Achse

**20** — Sollwerte S
S(Ref, Ast)

**40** — Brillenglas BG
Sph, Zyl, Achse
+ Akkomodation

**30** — Berechnung der Abbildungsfehler 2. Ordnung des Brillenglases

**50** — Kombination BG/Auge
K(Ref, Ast) = BG(Sph, Zyl, Achse) – V(Sph, Zyl, Achse)

**60** — Wiederholung für alle Durchblickstellen

**70** — Zielfunktion (Istwerte – Sollwerte)
$$Z = \sum (K(Ref, Ast)-S(Ref, Ast))^2$$

**80** — Wenn Z < vorgegebenem Wert =>
Ende
Sonst => Änderung der Fläche

**90** — Änderung der Fläche

**100** — Ende

**Fig. 1**

Bisher Standard:

Nahverordnung = Fernverordnung + Addition

| | ⊕ | ⌷ | ⌂ | ◿ | ⊕ | ✛ |
|---|------|------|----|------|----|------|
| 📑 | **2.00** | **1.00** | **35** | **4.00** | **45** | **2.00** |
| ≡⏐⏐ | 1.86 | 1.25 | 38 | 3.70 | 36 | 1.78 |

Refraktionsdaten

Ferne
+ Add →

**Basis: Impression**
**Ferne:** Sph = 0.0 dpt Zyl=0.0
Addition 1.5 dpt
**Nahzylinder ZylN=0.25 dpt Achse 90°**

Astigmatismus (Komb. Glas + Auge)

Bisher: Nur Angabe der Add

Nahwert-BG: Sph +1.5 Zyl 0.0
Nahwert-Soll: Sph +1.5 Zyl +.25 A 90°
Im Nahbereich fehlen 0.125 dpt Addition
und der Korrektionszylinder von 0.25 dpt

**Fig. 2**

EP 2 564 262 B1

neu:
Nahverordnung= Sph, Zyl, Achse

Astigmatismus (Komb. Glas + Auge)

| | ⊕ | ⊟ | ⏟ | ◿ | ⊕ | ✛ |
|---|---|---|---|---|---|---|
| 📖 | 2.00 | 1.00 | 35 | 4.00 | 45 | 2.00 |
| ⇶ | 1.86 | 1.25 | 38 | 3.70 | 36 | 1.78 |

Refraktionsdaten

Ferne

| | ⊕ | ⊟ | ⏟ | ◿ | ⊕ | ✛ |
|---|---|---|---|---|---|---|
| 📖 | 2.00 | 1.60 | 35 | 4.00 | 45 | 2.00 |
| ⇶ | 1.86 | 1.25 | 38 | 3.70 | 36 | 1.78 |

Nähe

Refraktionsdaten

Basis: Impression
Ferne:   Sph = 0.0 dpt Zyl=0.0
         Addition 1.5 dpt
**Nahzylinder Zyl$_N$=0.25 dpt Achse 90°**

Individuelle Nahverordnung

Nahwert-BG:  Sph +1.5 Zyl +.25 A 90°
Nahwert-Soll: Sph +1.5 Zyl +.25 A 90°
Vollkorrektion im Nahteil und entlang der HBL
Addition ist um 0.125 dpt höher

**Fig. 3**

EP 2 564 262 B1

## Sphäre Ferne - Nähe

**Fig. 4**

## Zylinder Ferne - Nähe

**Fig. 5**

## Achse Ferne - Nähe

Entfernung [dpt]

Fig. 6

## Sph. Äquivalent Ferne - Nähe

Entfernung [dpt]

Fig. 7

## Zylinder Ferne - Nähe

Fig. 8

Visus mit fester Akk. (AV=1.25)

**Fig. 9**

**Fig. 10**

Visus mit fester Akk. (AV=1.25)

**Fig. 11**

Fig. 12

**EP 2 564 262 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10313275 A1
- DE 10313275
- EP 0677177 A

- EP 1660928 A
- US 7249850 B

**In der Beschreibung aufgeführte Nicht-Patentliteratur**

- **K. KRAUSE.** Methoden der Refraktionsbestimmung. 1985, 158-161